# EUROPEAN PATENT SPECIFICATION

(11) **EP 4 288 897 B1**
(45) Date of publication and mention of the grant of the patent: **03.06.2026**
(21) Application number: 21717826.8
(22) Date of filing: 07.04.2021
(51) Int. Cl.: G06V 30/422, G06F 18/40, G06F 18/24, H04L 41/22

(54) **METHOD AND SYSTEM FOR INITIATING AN ACTION IN A UTILITY SYSTEM, INDUSTRIAL SYSTEM, OR COMMUNICATION NETWORK**
VERFAHREN UND SYSTEM ZUM EINLEITEN EINER AKTION IN EINEM VERSORGUNGSSYSTEM, INDUSTRIESYSTEM ODER KOMMUNIKATIONSNETZ
PROCÉDÉ ET SYSTÈME DE LANCEMENT D'ACTION DANS UN SYSTÈME UTILITAIRE, UN SYSTÈME INDUSTRIEL OU UN RÉSEAU DE COMMUNICATION

(30) Priority: 03.02.2021 IN 202141004642
(43) Date of publication of application: 13.12.2023
(73) Proprietor: Hitachi Energy Ltd, 8050 Zürich (CH)
(72) Inventor: KUMAR SAHA, Barun, Durgapur, West Bengal 713212 (IN); HAAB, Luca, 3018 Bern (CH); PODLESKI, Lukasz, 3097 Liebefeld (CH)
(74) Representative: Vossius & Partner Patentanwälte Rechtsanwälte mbB
(86) International application number: PCT/EP2021/059036
(87) International publication number: WO 2022/167104

(56) References cited:
- US-A1- 2016 219 078
- STRIJKERS RUDOLF ET AL: "Interactive Control over a Programmable Computer Network Using a Multi-touch Surface", 25 May 2009, ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 719 - 7, ISBN: 978-3-642-17318-9, XP047442984
- CATARCI TIZIANA ET AL: "Tangraphe : interactive exploration of network visualizations using single hand, multi-touch gestures", PROCEEDINGS OF THE 2018 INTERNATIONAL CONFERENCE ON ADVANCED VISUAL INTERFACES, 29 May 2018 (2018-05-29), New York, NY, USA, pages 1 - 5, XP055850704, ISBN: 978-1-4503-5616-9, DOI: 10.1145/3206505.3206519

## Description

### FIELD OF THE INVENTION

The invention relates to methods, devices, and systems for initiating an action in a utility system, industrial system, or communication network. The invention relates to methods, devices, and system that can be used for network flow management operations or other actions when commissioning or reconfiguring a utility system, industrial system, or communication network.

### BACKGROUND OF THE INVENTION

Modern industrial automation control systems (IACS), such as power generation systems or power transmission systems, power grids, or substations, and modern industrial systems include a vast number of components. Operation of a network, such as a communication network of an industrial automation control system (IACS), requires devices of the network to be configured during commissioning or reconfigured after the network has entered operation. For illustration, a network engineer must look at the operational state and make appropriate changes when required, for example, introducing a set of new traffic flows and/or removing existing traffic flows. Network Management Systems (NMSs) can be deployed to help in this regard. An NMS is a system operative to provision, discover, monitor and maintain computer networks, for example.

Even when an NMS is deployed, the NMS may be difficult to use correctly. This is especially true for new engineers, who are yet to get familiar with the NMS. Moreover, even experienced engineers may want to achieve certain small and recurrent tasks easily without having to navigate through an extensive user interface of the NMS. In addition, commissioning a new network often requires pre-configuring some network services (flows) by installing rules in switches. The complexity of navigating an extensive user interface of the NMS may make the commissioning process more time consuming, thereby delaying operation of the network.

Strijkers, R. et al. (2009). Interactive Control over a Programmable Computer Network Using a Multi-touch Surface. In: Allen, G., Nabrzyski, J., Seidel, E., van Albada, G.D., Dongarra, J., Sloot, P.M.A. (eds) Computational Science - ICCS 2009. ICCS 2009. Lecture Notes in Computer Science, vol 5545. Springer, Berlin, Heidelberg. https://doi.org/10.1007/978-3-642-01973-9_80, introduces the Interactive Network concept and describes the design and implementation of the first prototype. In an Interactive Network humans become an integral part of the control system to manage programmable networks and grid networks. The implementation consists of a multi-touch table that allows multiple persons to manage and monitor a programmable network simultaneously. The amount of interactive control of the multi-touch interface is illustrated by the ability to create and manipulate paths, which are either end-to-end, multicast or paths that contain loops. First experiences with the multi-touch table show its potential for collaborative management of large-scale infrastructures.

US 2016/0219078 A1 Network discloses a management technology which generates and dynamically updates an intuitive, interactive visualization of a computer network in live operation. The network management technology interprets human user interactions, such as gestures, conversational natural language dialog, and combinations of gestures and natural language dialog, as network directives. The technology can implement the network directives to, for example, facilitate analysis of network activity or to respond to network security events.

Thompson, J. et al., Tangraphe: interactive exploration of network visualizations using single hand, multi-touch gestures, AVI '18: Proceedings of the 2018 International Conference on Advanced Visual Interfaces, May 2018, Article No.: 43, Pages 1-5, https://doi.org/10.1145/3206505.3206519, teaches that touch-based displays are becoming a popular medium for interacting with visualizations. Network visualizations are a frequently used class of visualizations across domains to explore entities and relationships between them. However, little work has been done in exploring the design of network visualizations and corresponding interactive tasks such as selection, browsing, and navigation on touch-based displays. Network visualizations on touch-based displays are usually implemented by porting the conventional pointer based interactions as-is to a touch environment and replacing the mouse cursor with a finger. However, this approach does not fully utilize the potential of naturalistic multi-touch gestures afforded by touch displays. The paper presents a set of single hand, multi-touch gestures for interactive exploration of network visualizations and employs these in a prototype system, Tangraphe. The paper discusses the proposed interactions and how they facilitate a variety of commonly performed network visualization tasks including selection, navigation, adjacency-based exploration, and layout modification. It also discusses advantages of and potential extensions to the proposed set of one-handed interactions including leveraging the non-dominant hand for enhanced interaction, incorporation of additional input modalities, and integration with other devices.

### SUMMARY

There is a need to provide improved techniques for initiating an action in a utility system, industrial system, or communication network. There is in particular a need for improved techniques that allow a desired action to be initiated in a simple manner, using a form of input that can be easily understood by engineers and that is less prone to give rise to ambiguities than conventional intent-based network solutions. There is a need for improved techniques that allow flow management or other actions to be performed when commissioning a network (such as a communication network of an industrial automation control system (IACS) or a power transmission or distribution system) or a utility system or industrial system. There is a need for improved techniques that allow flow management or other actions to be performed when reconfiguring a controlled system (such as a utility system, industrial system, or communication network) during use.

According to the invention, which is defined by the appended set of claims, methods and system are provided in which a freehand user input including drawings and/or glyphs is received and interpreted to determine an engineer's intent for flow management or other actions. The actions may include network actions or other system-configuration related actions in a utility system, industrial system, or communication network.

A network engineer can be equipped with a portable input device, such as a tablet, whose display surface supports drawing with a stylus, hand, or both. The disclosed techniques allow a user to create a source group of nodes and a target group of nodes, using a freehand drawing (e.g., by encircling nodes that belong to the groups). The two groups can be connected with a joining element, such as a line. A graphical intent resolver (GIR) module can identify the source and target nodes, and accordingly can create the flow(s) (such as communication flows, power flows, or fluid flows). Alternatively or additionally, freehand text can also be written on the input device, which can be used to qualify the flow(s). The GIR uses text recognition to understand what a user has entered. A trigger can be sent to a network management system (NMS) or other control or management system to execute the desired command(s).

The graphical language interpreted by the techniques of this invention can operate with a vocabulary containing a few universally understood symbols, such as tick, cross, circle, and arrow. The GIR is operative to interpret the shape and, optionally, direction of the symbols and to identify the network devices that are marked.

According to an aspect of the claimed invention, a method of initiating an action in a utility system, industrial system, or communication network comprises: processing, by at least one integrated circuit, information on a freehand user input captured using an input device to identify at least one action to be performed; and causing, by the at least one integrated circuit, execution of the at least one action. Causing execution of the at least one action comprises causing a management or control system of utility system, industrial system, or communication network to execute the at least one action. Processing the freehand user input further comprises: retrieving context information for the utility system, industrial system, or communication network, wherein the context information comprises data retrieved from a configuration description and/or data retrieved from a process description of the utility system, industrial system, or communication network, determining, based on the context information, which actions are permissible, and using the determined permissible actions for interpreting the user's intent, as specified by the freehand user input. The determined permissible actions are used for determining which classifier(s) are to be applied to the freehand user input, or for selectively causing execution of the action(s) only if the action(s) are determined to be permissible actions.

The method may further comprise outputting a graphical representation of at least part of the utility system, industrial system, or communication network via an optical output unit of the input device.

The information on the freehand user input may comprise information on graphical markings and/or alphanumeric symbols overlaid onto the graphical representation by the freehand user input.

The method may further comprise retrieving, by the input device, topology information for the utility system, industrial system, or communication network for generating the graphical representation.

The graphical representation may be generated based on the topology information and may comprise nodes and links between nodes.

Processing the information on the freehand user input may comprise identifying at least one node as being marked by the freehand user input.

Identifying the at least one node as being marked by the freehand user input may comprise identifying a closed graphical shape in the freehand user input, and identifying nodes having an alphanumeric representation or graphical representation that overlaps with the closed graphical shape or that is located within the closed graphical shape.

Identifying the at least one node as being marked by the freehand user input may comprise performing an ambiguity resolution.

The ambiguity resolution may comprise performing a threshold comparison.

The ambiguity resolution may comprise determining an overlap between an envelope of the alphanumeric representation or the graphical representation of the at least one node with the closed graphical shape and performing a threshold comparison of the overlap.

The threshold comparison may be adaptively modified as a function of a zoom level setting of the input device.

A threshold used in the threshold comparison may be adaptively modified as a function of a zoom level setting of the input device.

Identifying at least one node as being marked by the freehand user input may comprise identifying a first group of nodes comprising one or several first nodes as being marked by the freehand user input and identifying a second group of nodes comprising one or several second nodes as being marked by the freehand user input, the second group being different from the first group.

The first group may be a source group and the second group may be a target group of a flow (such as a communication flow, electric power flow, or fluid flow), or vice versa.

Causing execution of the at least one action may comprise configuring a flow (such as a communication flow, electric power flow, or fluid flow) between the one or several first nodes and the one or several second nodes.

Processing the information on the freehand user input may further comprise determining a type of action to be performed based on at least one freehand graphical marking and/or freehand alphanumeric input included in the freehand user input and associated with the at least one node.

Processing the information on the freehand user input may comprise determining whether the freehand user input comprises a joining element that connects at least two nodes.

Processing the information on the freehand user input may comprise performing a shape or text recognition to identify an action label included in the freehand user input.

The action label may comprise text or a symbol in the freehand user input.

The at least one action may be identified based on the action label and, if present, based on the joining element.

Processing the information on the freehand user input may comprise executing a classifier.

The classifier may be operative to classify a drawn shape into one of several pre-defined shapes.

The classifier may be operative to classify a freehand alphanumeric input in the freehand user input into words and numerical identifiers.

The classifier may be operative to classify a freehand textual input in the freehand user input into a pre-defined set of vocabulary words.

The method may further comprise a classifier training of the classifier in response to detecting a new user logon.

Causing execution of the at least one action may be selectively enabled in response to successful completion of the classifier training only.

Causing execution of the at least one action may be disabled prior to successful completion of the classifier training.

As mentioned, according to the claimed invention, processing the freehand user input comprises retrieving context information for the utility system, industrial system, or communication network and using the context information for processing the user input, wherein the context information comprises data retrieved from a configuration description and/or data retrieved from a process description of the utility system, industrial system, or communication network.

The configuration description may be a standardized configuration description.

The configuration description may be a configuration description in accordance with a Substation Configuration Language (SCL), e.g., an SCL that is compatible with IEC 61850-6 (such as IEC 61850-6:2020).

As mentioned, according to the claimed invention, processing the freehand user input further comprises determining, based on the context information, which actions are permissible, and using the determined permissible actions for interpreting the user's intent, as specified by the freehand user input. The determined permissible actions are used for determining which classifier(s) are to be applied to the freehand user input, or for selectively causing execution of the action(s) only if the action(s) are determined to be permissible actions.

The at least one action may be or may include at least one flow management action.

The flow management may be management of a communication flow.

The communication flow may be a communication flow in an IACS.

The communication flow may be a communication flow in an IACS of a power generation, distribution and/or transmission system.

The flow management may be management of a power flow.

The power flow may be a power flow in a power generation, distribution and/or transmission system.

The at least one action may comprise one or several of the following: configuring a communication flow, reconfiguring a communication flow, configuring a power flow of a power transmission or distribution network, reconfiguring a power flow of a power transmission or distribution network.

Configuring or reconfiguring a communication flow may comprise configuring or reconfiguring a switch, router, port, or firewall.

Configuring or reconfiguring a power flow may comprise triggering a switching of a circuit breaker (CB), switch, tap changer, or other power system device.

Configuring or reconfiguring a power flow may comprise modifying a decision logic of a circuit breaker (CB), switch, tap changer, or other power system device.

The at least one action may comprise configuring or reconfiguring at least one Intelligent Electronic Device (IED) operative in accordance with IEC 61850.

The method may further comprise executing the at least one action.

The action may be initiated during commissioning of the utility system, industrial system, or communication.

The action may be initiated during field operation of the utility system, industrial system, or communication.

The action may be executed by a management or control system of the utility system, industrial system, or communication network (such as by a network management system (NMS)) or under the control of a management or control system of the utility system, industrial system, or communication network.

The controlled system may be a communication network, in particular of an IACS.

The controlled system may be an electric power system.

The controlled system may be a power generation, distribution or transmission system or network.

The input device may be a handheld device.

The handheld device may have a wireless interface for communication with a cloud or edge and/or for communication with the management or control system of the utility system, industrial system, or communication network (e.g., with an NMS).

The handheld device may have a wired interface for communication with the management or control system of the utility system, industrial system, or communication network (e.g., with an NMS).

The action may be initiated by the freehand user input on the handheld device, without displaying menu items of a menu of the management or control system of the utility system, industrial system, or communication network on the handheld device.

The action may be initiated by the freehand user input on the handheld device, without displaying menu items of the NMS menu on the handheld device.

The action may be initiated by the freehand user input on the handheld device, without displaying a graphical user interface (GUI) of the NMS menu on the handheld device.

The freehand user input may be entered on a blank screen of the handheld device.

The freehand user input may specify any one or any combination of the following:
(i) Group: A logical group is a collection of one or more nodes in a topology of the utility system, industrial system, or communication network. A group may be created by drawing a closed shape, such as circle and box, around one or more nodes. Optionally, a group may be created without enclosing anything inside it. In the absence of enclosed topology nodes, network identifiers, such as IP address, can be written inside a group to identify its elements.
(ii) Interaction: Two groups can interact with each other, which can be indicated by joining the two groups with a joining element (e.g., a line). Arrowheads at one (or both) end(s) of such a line can indicate the direction of interaction.
(iii) Action label: An action label indicates what action is to be taken. It can be assigned to two interacting groups or a standalone group.

The method may be performed for commissioning the utility system, industrial system, or communication network.

The method may be performed for re-configuring the utility system, industrial system, or communication network during field operation.

Also disclosed is instruction code executable by at least one processing device, in particular at least one integrated circuit, in particular at least one computer, that causes the at least one processing device to automatically perform the method according to any embodiment.

Further disclosed is a storage medium having stored thereon instruction code executable by at least one processing device, in particular at least one integrated circuit, in particular at least one computer, that causes the at least one processing device to automatically perform the method according to any embodiment.

The storage medium may be a non-transitory storage medium.

According to a further aspect of the claimed invention, a system for initiating an action in a utility system, industrial system, or communication network comprises: an interface operative to receive information on a freehand user input, and at least one integrated circuit operative to process the information on the freehand user input to identify at least one action to be performed, and cause execution of the at least one action. The at least one integrated circuit is further operative such that processing the freehand user input comprises retrieving context information for the utility system, industrial system, or communication network, wherein the context information comprises data retrieved from a configuration description and/or data retrieved from a process description of the utility system, industrial system, or communication network, determining, based on the context information, which actions are permissible, and using the determined permissible actions for interpreting the user's intent, as specified by the freehand user input. The determined permissible actions are used for determining which classifier(s) are to be applied to the freehand user input, or for selectively causing execution of the action(s) only if the action(s) are determined to be permissible actions.

The system may further comprise a management or control system operative to be communicatively coupled with the at least one integrated circuit and to execute the at least one action.

The at least one integrated circuit may be integrated into a handheld device and may be operative to trigger the management or control system to execute the at least one action.

The system may further comprise a handheld device to receive the freehand user input, the handheld device being communicatively coupled with the interface to provide information on the freehand user input to the at least one integrated circuit.

The system may be operative for outputting a graphical representation of at least part of the utility system, industrial system, or communication network via an optical output unit of the input device.

The system may be operative such that the information on the freehand user input may comprise information on graphical markings and/or alphanumeric symbols overlaid onto the graphical representation by the freehand user input.

The system may be operative for retrieving, by the input device, topology information for the utility system, industrial system, or communication network for generating the graphical representation.

The system may be operative such that the graphical representation is generated based on the topology information and may comprise nodes and links between nodes.

The system may be operative such that processing the information on the freehand user input comprises identifying at least one node of the utility system, industrial system, or communication network as being marked by the freehand user input.

The system may be operative such that identifying the at least one node as being marked by the freehand user input comprises identifying a closed graphical shape in the freehand user input, and identifying nodes having an alphanumeric representation or graphical representation that overlaps with the closed graphical shape or that is located within the closed graphical shape.

The system may be operative such that identifying the at least one node as being marked by the freehand user input comprises performing an ambiguity resolution.

The system may be operative such that the ambiguity resolution comprises performing a threshold comparison.

The system may be operative such that the ambiguity resolution comprises determining an overlap between an envelope of the alphanumeric representation or the graphical representation of the at least one node with the closed graphical shape and performing a threshold comparison of the overlap.

The system may be operative such that the threshold comparison is adaptively modified as a function of a zoom level setting of the input device.

The system may be operative such that a threshold used in the threshold comparison is adaptively modified as a function of a zoom level setting of the input device.

The system may be operative such that identifying at least one node of the utility system, industrial system, or communication network as being marked by the freehand user input comprises identifying a first group of nodes comprising one or several first nodes as being marked by the freehand user input and identifying a second group of nodes comprising one or several second nodes as being marked by the freehand user input, the second group being different from the first group.

The system may be operative such that the first group may be a source group and the second group may be a target group of a flow (such as a communication flow, electric power flow, or fluid flow), or vice versa.

The system may be operative such that causing execution of the at least one action comprises configuring a flow between the one or several first nodes and the one or several second nodes.

The system may be operative such that processing the information on the freehand user input further comprises determining a type of action to be performed based on at least one freehand graphical marking and/or freehand alphanumeric input included in the freehand user input and associated with the at least one node.

The system may be operative such that processing the information on the freehand user input comprises determining whether the freehand user input comprises a joining element that connects at least two nodes.

The system may be operative such that processing the information on the freehand user input comprises performing a shape or text recognition to identify an action label included in the freehand user input.

The system may be operative such that the action label may comprise text or a symbol in the freehand user input.

The system may be operative for identifying the at least one action based on the action label and, if present, based on the joining element.

The system may be operative for executing a classifier.

The classifier may be operative to classify a drawn shape into one of several pre-defined shapes.

The classifier may be operative to classify a freehand alphanumeric input in the freehand user input into words and numerical identifiers.

The classifier may be operative to classify a freehand textual input in the freehand user input into a pre-defined set of vocabulary words.

The system may be operative for performing a classifier training of the classifier in response to detecting a new user logon.

The system may be operative such that causing execution of the at least one action is selectively enabled in response to successful completion of the classifier training only.

The system may be operative such that causing execution of the at least one action is disabled prior to successful completion of the classifier training.

As mentioned, according to the claimed invention, the system is operative such that processing the freehand user input comprises retrieving context information for the utility system, industrial system, or communication network and using the context information for processing the user input, wherein the network context information comprises data retrieved from a configuration description and/or data retrieved from a process description of the utility system, industrial system, or communication network.

The system may be operative such that the configuration description is a standardized configuration description.

The system may be operative such that the configuration description is a configuration description in accordance with a Substation Configuration Language (SCL), e.g., an SCL that is compatible with IEC 61850-6 (such as IEC 61850-6:2020).

As mentioned, according to the claimed invention, the system is further operative such that processing the freehand user input comprises determining, based on the context information, which actions are permissible and such that the determined permissible actions are used for interpreting the user's intent, as specified by the freehand user input. The determined permissible actions are used for determining which classifier(s) are to be applied to the freehand user input, or for selectively causing execution of the action(s) only if the action(s) are determined to be permissible actions.

The system may be operative such that the at least one action is or includes at least one flow management action.

The flow may be a communication flow.

The communication flow may be a communication flow in an IACS.

The communication flow may be a communication flow in an IACS of a power generation, distribution and/or transmission system.

The flow may be a power flow.

The power flow may be a power flow in a power generation, distribution and/or transmission system.

The flow may be a fluid flow.

The system may be operative such that the at least one action comprises one or several of the following: configuring a communication flow, reconfiguring a communication flow, configuring a power flow of a power transmission or distribution network, reconfiguring a power flow of a power transmission or distribution network.

The system may be operative such that configuring or reconfiguring a communication flow comprises configuring or reconfiguring a switch, router, port, or firewall.

The system may be operative such that configuring or reconfiguring a power flow comprises triggering a switching of a circuit breaker (CB), switch, tap changer, or other power system device.

The system may be operative such that configuring or reconfiguring a power flow comprises modifying a decision logic of a circuit breaker (CB), switch, tap changer, or other power system device.

The at least one action may comprise configuring or reconfiguring at least one Intelligent Electronic Device (IED) operative in accordance with IEC 61850.

The system may comprise at least one device operative to execute the at least one action.

The system may be operative such that the action can be initiated during commissioning of the utility system, industrial system, or communication network.

The system may be operative such that the action can be initiated during field operation of the utility system, industrial system, or communication network.

The system may have a control or management system of the utility system, industrial system, or communication network (such as a network management system (NMS)) that executes or controls execution of the at least one action.

The system may comprise the network.

The network may be a communication network, in particular of an IACS.

The network may be a power distribution or transmission network.

The system may comprise an electric power system.

The input device may be a handheld device.

The handheld device may have a wireless interface for communication with a cloud or edge and/or for communication with a management or control system of the utility system, industrial system, or communication network (e.g., with an NMS).

The handheld device may have a wired interface for communication with the management or control system of the utility system, industrial system, or communication network (e.g., with an NMS).

The system may be operative such that the action can be initiated by the freehand user input on the handheld device, without displaying menu items of a management or control system of the utility system, industrial system, or communication network (e.g., of an NMS menu) on the handheld device.

The system may be operative such that the action can be initiated by the freehand user input on the handheld device, without displaying a graphical user interface (GUI) of a menu of the management or control system of the utility system, industrial system, or communication network on the handheld device.

The action may be initiated by the freehand user input on the handheld device, without displaying menu items of the NMS menu on the handheld device.

The system may be operative such that the freehand user input can be entered on a blank screen of the handheld device.

The system may be operative to interpret the freehand user input that specifies any one or any combination of the following:
(i) Group: A logical group is a collection of one or more nodes in a topology representation of the utility system, industrial system, or communication. A group may be created by drawing a closed shape, such as circle and box, around one or more nodes. Optionally, a group may be created without enclosing anything inside it. In the absence of enclosed topology nodes, identifiers, such as IP address, can be written inside a group to identify its elements.
(ii) Interaction: Two groups can interact with each other, which can be indicated by joining the two groups with a joining element (e.g., a line). Arrowheads at one (or both) end(s) of such a line can indicate the direction of interaction.
(iii) Action label: An action label indicates what action is to be taken. It can be assigned to two interacting groups or a standalone group.

The system may be used for commissioning the utility system, industrial system, or communication network.

The system may be used for re-configuring the utility system, industrial system, or communication network during field operation.

Further discloses herein is a method of interacting with an actor of a utility system, an industrial system, or a communication network via freehand user input, using the system according to the invention.

The method may be used to perform a management or control action in the utility system, industrial system, or communication network, using an input device having a graphical user interface.

The method may be used to perform the management or control action without having to navigate through a menu of a management or control system or of any other device of the utility system, industrial system, or communication network.

The method may be used to facilitate interaction of a user (such as an operator or engineer of the utility system, industrial system, or communication network) with a management or control system of the utility system, industrial system, or communication network, without requiring a menu-based graphical user interface of the management or control system to be displayed.

In the methods, devices, and systems, the utility system may be an electric power system, such as an electric power grid or a part thereof.

The methods, devices, and systems according to the invention can be used for initiating actions, such as flow management, during commissioning and/or field operation of a utility system, industrial system, or communication network in an intuitive manner.

A user's intent is determined based on a freehand drawing, obviating the complexity and challenges faced by an engineer when having to navigate through a complex menu of a NMS or other control or management system even for implementing small changes.

The methods, devices, and systems according to the invention can be used in association with a communication network of an IACS, e.g. a communication network of a power generation, transmission or distribution system, in association with another utility system, or in association with an industrial system, such as an industrial system having an IACS. The methods, devices, and systems according to the invention allow communication flows and/or power flows and/or fluid flows to be managed in an intuitive manner, but can also be used for other actions in the utility system, industrial system, or communication network.

### BRIEF DESCRIPTION OF THE DRAWINGS

The subject-matter of the invention will be explained in more detail with reference to preferred exemplary embodiments which are illustrated in the attached drawings, in which:
Figure 1 is a schematic representation of a system according to an embodiment.
Figure 2 is a schematic representation of a system according to an embodiment.
Figure 3 is a flow chart of a method.
Figure 4 is a flow chart of a method.
Figure 5 is a view of an input device showing exemplary freehand user input.
Figure 6 is a flow chart of a method.
Figures 7 to 10 are views of an input device, with Figures 8 to 10 showing exemplary freehand user input.
Figure 11 is a flow chart of a method.
Figure 12 is a flow chart of a method.
Figure 13 is a view of an input device.
Figure 14 is a flow chart of a method.
Figure 15 is a view of an input device showing exemplary freehand user input.
Figure 16 is a flow chart of a method.
Figure 17 is a flow chart of a method.
Figure 18 is a view of an input device showing exemplary freehand user input during training.
Figure 19 is a flow chart of a method.
Figure 20 is a block diagram of a cloud/edge device.
Figure 21 is a block diagram of an input device.
Figure 22 is a diagram illustrating a system.
Figure 23 is a block diagram of an input device.

### DETAILED DESCRIPTION OF EMBODIMENTS

Exemplary embodiments of the invention will be described with reference to the drawings in which identical or similar reference signs designate identical or similar elements. While some embodiments will be described in the context of a communication network or a power generation system, a power transmission system, or a power distribution system, the methods and devices described in detail below may be used in a wide variety of systems.

The features of embodiments may be combined with each other, unless specifically noted otherwise.

According to embodiments of the invention, devices, systems, and methods are disclosed that allow an engineer to interact with a network management system (NMS) or another actor (in particular a management or control system) of a utility system, industrial system, or communication network in a simple and intuitive manner. Devices, systems, and methods are provided that allow freehand user input to be received, interpreted, and converted into an appropriate network action.

As used herein, the term "network management system" refers to a system that is operative to provision, discover, monitor and maintain networks, such as computer network. The system may be implemented using one or several integrated circuit(s) operative to execute computer-readable instruction code to provision, discover, monitor and maintain networks, such as computer network.

A handheld input device may be used to receive the user input. The handheld input device has a user interface that allows freehand drawings and/or writing to be input. Information on the freehand user input is provided to one or several integrated circuit(s) for processing.

One or several integrated circuit(s) (IC(s)) process the information on the freehand user input. The one or several IC(s) may be arranged in the handheld input device or may be provided separately therefrom, e.g. in an edge device or in the cloud. The processing may comprise a shape recognition and/or text recognition. By performing the shape recognition and/or text recognition, it may be determined
- to which node(s) or group(s) of nodes an action (such as flow management) is to be applied;
- which type of action is desired by the user (e.g., disabling and/or enabling data streaming, setting a firewall configuration, enabling or disabling a power flow);
- if the action is associated with an interaction among plural groups (e.g., in communication or power flow management), a directionality of the action (e.g., disabling and/or enabling unidirectional or bidirectional data streaming, enabling or disabling a unidirectional or bidirectional power flow).

An NMS or other management or control system of a utility system, industrial system, or communication network may be triggered to execute the identified network action(s). The NMS or other management or control system may effect a configuration or reconfiguration of one or several communication network devices. This may comprise configuring or re-configuring a firewall, a communication switch, a router, ports of network card(s), etc. The NMS or other management or control system may effect a configuration or reconfiguration of power system devices. This may comprise configuring or re-configuring a logic of one or several intelligent electronic device(s) (IED(s)), causing switching of one or several circuit breaker(s) (CB(s)), etc.

As used herein, the term "freehand user input" refers to input that allows a user to freely mark any point on a sensitive area of an input device, without being limited or bound by menu items, activation areas or other activatable regions of an NMS graphical user interface (GUI).

The "freehand user input" may include graphical elements and/or handwriting.

The "freehand user input" may be input by a user's finger or by an electronic input element, e.g., by a stylus.

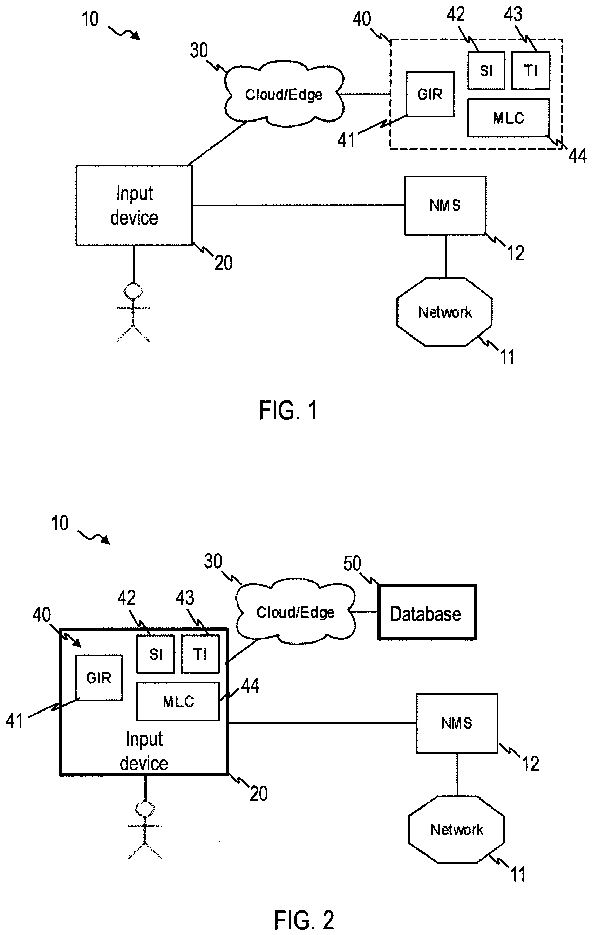

Figures 1 and 2 are schematic representations of a system 10. The system 10 comprises a network 11 and a network management system 12. The network management system 12 is interfaced with network devices of the network 11 and is operative to perform network actions, such as flow management, without being limited thereto.

While a network 11 is an example for a controlled system and a network management system (NMS) 12 is an example for an actor in the controlled system in various embodiments, the techniques disclosed herein are generally applicable to trigger execution of tasks in utility system (such as electric power systems, including electric power generation, distribution, and transmission systems; fluid grids, such as fresh water, gas, or wastewater grids), industrial system (such as manufacturing plants having an Industrial Automation System (IACS)), or communication network.

While the action that is being triggered may be a network action, the techniques disclosed herein are applicable to a wide variety of actions in a utility system, industrial system, or communication network, such as flow management actions.

The system 10 comprises an input device 20. The input device 20 may be a digital drawing device. The input device 20 allows a user to enter freehand user input. The input device 20 may be operative to provide a blank screen on which the user may enter the freehand user input and/or may output a graphical network representation showing node(s) and network links, on which the freehand user input may be overlaid by the user.

The system 10 may comprise a stylus that can be used to draw on a surface of the input device 20. Alternatively, a user can draw shapes directly on the surface using a finger. A software module running in the input device 20 captures all the lines and shapes drawn on its. This, for example, can be done by capturing the screen coordinates triggered by the stylus or finger. Such coordinates are highlighted to display the shape drawn by a user. Information on the user input is provided to and processed by a processing module 40.

The system 10 comprises one or several IC(s) that provide the processing module 40 for processing the freehand user input. The processing module 40 may be incorporated into the input device 20 (Figure 2) or may be provided separately from the input device 20 (Figure 1). The processing module 40 may be provided in a cloud device or an edge device 30.

The processing module 40 executes a shape interpreter (SI) 42 operative to discriminate various shapes input via the input device 20. The SI 42 may be operative to discriminate closed graphical shapes from graphical shapes that are not closed. The SI 42 may be operative to discriminate joining elements (such as lines) having one or several end arrows from joining elements having no end arrow. The SI 42 may be operative to discriminate a pre-defined set of graphical shapes, such as tick marks or other graphical primitives. The SI 42 may be or may comprise a first classifier operative to

The processing module 40 executes a text interpreter (TI) 43. That TI 43 may be operative to recognize individual characters. The TI 43 may be operative to perform the recognition for at least a predefined set of words in accordance with a vocabulary.

The SI 42 and/or the TI 43 may respectively be or include a classifier. The SI 42 may execute a first classifier that classifies graphical marks. The first classifier may determine whether graphical input included in the freehand user input belong to any one of a set of pre-defined graphical elements. The pre-defined graphical elements may define a vocabulary of permissible graphical inputs. The set of pre-defined graphical elements may include a first basic set of pre-defined graphical elements (e.g., of up to 50 or up to 20 graphical elements). The basic set may be extensible for a given network (based on policies of the network operator) and/or in a user-specific manner (based on user preferences). Classifier training of the first classifier may be performed in response to detecting a new user logon to train the first classifier to recognize any one of the pre-defined graphical elements of at least the basic set. Classifier training of the first classifier may be performed in response to detecting that the user wishes to extend the set of pre-defined graphical elements by adding new graphical primitives.

The TI 43 may execute a second classifier that classifies alphanumeric marks. The second classifier may determine whether alphanumeric input included in the freehand user input belong to any one of a set of pre-defined alphanumeric elements (letters and/or numbers). The second classifier may determine whether a word included in the alphanumeric input is identical or similar (when using a similarity metric) to a vocabulary word of a vocabulary of permissible words. The second classifier may determine whether a sequence of digits, possibly in association with interpunctuation symbols, denotes a port or address (e.g., MAC address or ethernet address).

The vocabulary of permissible words may include a basic set of pre-defined words (e.g., of up to 50 or up to 20 words). The basic set may be extensible for a given network (based on policies of the network operator) and/or in a user-specific manner (based on user preferences). Classifier training of the second classifier may be performed in response to detecting a new user logon to train the second classifier to recognize letters and/or digits. Classifier training of the second classifier may be performed in response to detecting that the user wishes to extend the set vocabulary words.

The first and/or second classifiers may be machine learning classifiers. A machine learning classifier (MLC) 44 may be executed to determine whether sections of the freehand user input include alphanumeric input (in which case it is processed further by the TI 43) or graphical shapes (in which case it is processed further by the SI 42).

The processing module 40 executes graphical intent resolver (GIR) module 41. The GIR 41 has the overall responsibility of resolving a freehand graphical input intent. The GIR 41 accepts screen coordinates from the input device 20, invokes the SI 42 and TI 43, and can resolve the underlying network action.

Thus, the processing module 40 can process the freehand user input to determine the network action to be performed. This may include determining which node(s) are to be affected by the action (e.g., by determining unique identifiers for those node(s)), which type of action is to be performed (e.g., by enabling or disabling communication flows or power flows or by enabling or disabling other node functions), and optionally whether the type of action involves an interaction between several nodes or groups of nodes, in which case a directionality of the network action may be determined.

The processing module 40 can provide the information on the network action that is to be performed to the NMS 12. The NMS 12 executes the network action in the network 11. The NMS can configure or re-configure several network devices of the network 11 in accordance with the desired network action determined by the processing module 40.

The NMS 12 may have a stateful or stateless Application Programming Interface (API). The NMS 12 may have a REpresentational State Transfer (REST) Application Programming Interface (API) or gRPC Remote Procedure Call (gRPC) interface. The input device 20 may be operative for communicative coupling with the stateless or stateful API (e.g., with a REST API or gRPC interface) of the NMS 12.

While the freehand user input received at the input device 20 is not restricted by menu items or other activatable areas of a conventional NMS GUI, information on at least part of the network 11 may be output via an optical output unit (e.g., a screen) of the input device 20. The freehand user input may be overlaid onto a graphical network representation showing at least part of the network 11. The graphical network representation may be automatically generated based on a configuration description, e.g., based on a substation configuration file (SCD) or other configuration description in accordance with IEC 61850. The information on the network topology may be retrieved from a database 50.

The graphical network representation may show nodes and links between nodes. Depending on the commissioning or re-configuration task that is performed, the graphical network representation may show (i) network devices having communication capabilities and communication links between the network devices, where present, (ii) primary or secondary devices of an electric power system with electrically conductive connections (such as busbars), (iii) either one of the preceding options (i) and (ii) in a selective manner, to allow both a communication network and power flow to be commissioned and/or re-configured.

The input device 20 has a touch-sensing and/or proximity-sensing screen or other touch-sensing and/or proximity-sensing screen user interface. Information on all pixels selected by the user freehand user input may be provided to the processing module 40 for determining, based on the freehand user input, which network action is desired.

As shown in Figures 1 and 2, the input device 20 may be communicatively interfaced with the NMS 12 during operation. The input device 20 may be communicatively coupled with a stateless API of the NMS 12. The input device 20 may be communicatively coupled with a stateful API of the NMS 12. The input device 20 may be communicatively coupled with a REST API or gRPC interface of the NMS 12.

When the processing module 40 is provided separately from the input device 20 (Figure 1), the input device 20 may receive a result of the processing performed by the processing module 40, which specifies the network action(s) to be performed as determined based on the user input, and may cause the NMS 12 to execute the network actions to be performed.

During operation of the system 10,
- the processing module 40 receives information on the freehand user input from the touch-sensing and/or proximity-sensing screen or other touch-sensing and/or proximity-sensing screen user interface of the input device 20 (e.g., in the form of screen coordinates of all activated points, optionally relative to a graphical network representation);
- the processing module 40 determines which type of network action is to be performed and which node(s) are affected by the network action; the processing module 40 may use network context (e.g., information on network topology included in a configuration description and/or information on a process description) to resolve the user's intent, e.g. by determining which network action(s) are permissible; and
- the processing module 40 provides information on the network action(s) that is/are to be performed to the input device 20 (Figure 1) or the NMS 12 to allow execution of the network action(s) to be triggered.

During operation of the system 10,
- the touch-sensing and/or proximity-sensing screen or other touch-sensing and/or proximity-sensing screen user interface of the input device 20 provides information on the freehand user input to the processing module 40 (e.g., in the form of screen coordinates of all activated points, optionally relative to a graphical network representation);
- the input device 20 may receive information on the network actions that are to be performed based on the freehand user input from the processing module 40 if the processing module 40 is provided separately from the input device 20; and
- the input device 20 causes the NMS 12 to execute the network action(s).

The NMS 12 may provide a GUI that is distinct and separate from the user interface of the input device 20. For illustration, the NMS 12 may have a menu-based GUI which can be used by the engineer for performing more complex tasks, such as commissioning of an entire substation or network.

The processing module 40 and/or input device 20 may be selectively invoked by the engineer for performing re-configuration tasks during field operation and/or for performing simpler sub-tasks of the commissioning process.

The processing module 40 and/or input device 20 provide an intuitive way of allowing an engineer to interact with an NMS 12. Freehand graphical user input is processed to cause execution of network action(s), without requiring the user to navigate through the conventional menu of the NMS 12.

Drawings and glyphs are used since the dawn of civilization to express one's intents, and are understood by most people with ease. This facilitates the use of the input device 20 for allowing an engineer to interact with an NMS based on freehand user input.

A network engineer or operator ("user") is equipped with a portable device 20, such as tablets, whose display surface supports drawing with a stylus, hand, or both. The device, henceforth referred to as input device 20, is a digital drawing device (DDD). The input device 20 can load a topology graph of the network 11 on its screen. Such a graphical network representation can be pre-stored in the input device 20 or elsewhere.

In some use cases, flows between first node(s) of a first group and second node(s) of a second group can be managed. The input device 20 allows the user to create a "source group" by drawing a closed graphical shape (approximating a circle, rectangle, or other closed shaped) around one or more nodes (representing switches and hosts) in the graphical network representation. Similarly, input device 20 allows the user to create a "target group". The input device 20 allows the two groups to be connected with a line.

The GIR module 41 runs in the background, which identifies the source and target nodes, and accordingly creates network flow(s). Freehand text can also be written on the input device 20, which can be used to qualify network flow(s). The GIR 41 may invoke shape recognition to identify shapes included in the freehand user input. The GIR 41 may invoke text recognition to understand what a user has entered as freehand alphanumeric (e.g., textual) input. A trigger is sent to the NMS to execute the desired network command(s).

The processing module 40 may be operative to interpret a small (but extensible) vocabulary containing a few universally understood graphical primitives. The graphical primitives may include symbols, such as tick, cross, circle, and arrow. The GIR 41 can apply various algorithms (such as artificial neural networks acting as classifiers, support vector machines (SVMs) etc.) to interpret the shape and direction of the symbols and to identify the network devices that are marked.

Text and shape recognition may be implemented by machine learning techniques. Machine learning and image processing can be used to recognize shapes, which helps in resolving an intent. It will be appreciated that various programs are available that allow freehand alphanumeric input to be converted into text.

The SI 42 interprets the captured shapes. These shapes, for example, can include straight lines, curved lines, and lines with arrowheads. Closed shapes can include circles, ellipses, and rectangles. Since these are drawn by hand, these lines and shapes are typically distorted. The SI 42 can use a machine learning classifier to reliably classify shapes, possibly after classifier training, as will be explained below.

As illustrated in Figure 1, the SI 42 does not need to run in the input device 20, but can be executed in the cloud/edge. In such case, the input device 20 sends the captured screen coordinates to the cloud via a wireless network interface. The SI 42 in the cloud/edge interprets the shapes and provides a processing result to the input device 20.

Irrespective of whether the SI 42 is executed locally in the input device 20 or in a processing module 40 separate from the input device 20, the SI 42 can assign a unique shape code (USC) to all recognized shapes. For example, a line without any arrowhead may be assigned a first USC. A line with a single arrowhead may be assigned a second USC different from the first USC. A line with two arrowheads may be assigned a third USC different from the first and second USCs. In addition, the SI 42 can recognize various commonly used and universally understood shapes. For example, a tick mark (✔) symbol may be used to indicate confirmation or affirmation, whereas an x-mark ( 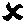 ) symbol may be used to indicate negation.

The SI 42 and/or GIR 41 may interpret the symbols based on network context. Data on a network configuration description and/or data retrieved from a process description may be retrieved and processed to interpret the symbols.

The TI 43 can recognize alphabets of one or several languages, such as English.

The TI 43 recognizes individual letters of the supported language(s). The TI 43 recognizes a closely placed sequence of letters as a word, and a closely placed sequence of words as a phrase. Input parameters are automatically set (e.g., based on a zoom setting of the input device 20 and/or based on the spacing between activated pixels in the freehand user input) so that the length of input phrases can be limited.

The TI 43 can further identify whether a sequence consists of words (for example, "allow all"), numbers (for example, "8080"), network entities (for example, "10.0.0.1"), or a mix (for example, "open 10.0.0.1:80"). The TI 43 can use action verbs, such as "allow" and "drop", as a parameter to identify the intended network action. Additionally or alternatively, the SI may also resolve symbolic notations, such as a tick mark (✔) symbol and an x-mark ( 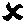 ) symbol into action verbs, which can be used by the TI 43.

A machine learning classifier (MLC) 44 classifies the freehand user inputs to the input device 20 into shapes and texts. Subsequently, the SI 42 and TI 43, respectively, interprets the inputs further.

The interaction between an input device 20 and the other components such as SI 42, TI 43, and MLC 44 is moderated by the GIR 41. The GIR 41 has the overall responsibility of resolving a network flow management intent. In particular, the GIR 41 accepts screen coordinates from the input device 20, invokes the MLC 44, SI 42, and TI 43 for decoding shapes and alphanumeric input, and resolves the underlying network operation.

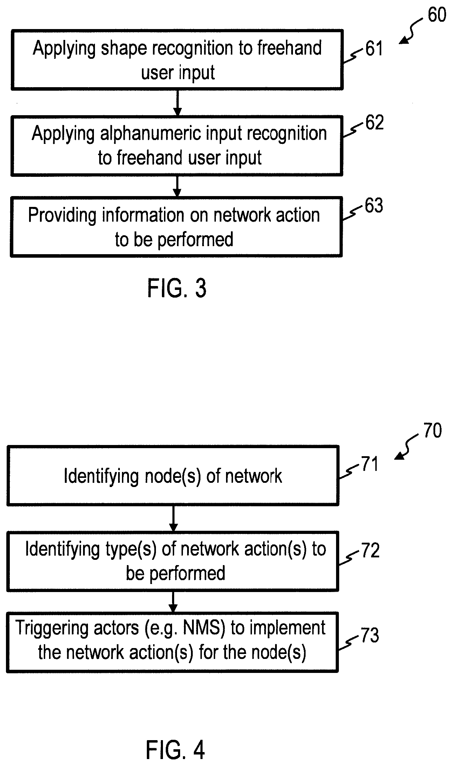

Figure 3 is a flow chart of a method 60. The method 60 may be performed automatically by the processing module 40.

At step 61, a shape recognition is applied to at least part of received freehand user input. The shape identification may be applied to a part of the freehand user input that is classified as being non-alphanumeric input by an MLC 44. Shape recognition may comprise executing a first classifier to detect closed shapes, joining elements, or any one of a pre-defined set of graphical marks and their respective positions in the freehand user input. Shape recognition may comprise assigning unique shape codes to each of the shapes.

At step 62, alphanumeric input recognition is applied to at least another part of received freehand user input. The alphanumeric input recognition may be applied to the part of the freehand user input that is classified as being alphanumeric input by an MLC 44. Alphanumeric input recognition may comprise identifying phrases (e.g., using thresholding applied to inter-character spacing). Alphanumeric input recognition may comprise converting the freehand user input into characters, sequence(s) of digits, or words, and/or assigning word identifiers to textual input.

At step 63, information on the network action(s) specified by the freehand user input may be provided. This may comprise outputting, by the input device 20, a trigger to the NMS 12 to cause the NMS 12 to implement the desired network action(s).

Figure 4 is a flow chart of a method 70. The method 70 may be performed automatically by the processing module 40.

At step 71, one or several node(s) of the network are identified as being marked by the freehand user input. The one or several node(s) may be designate communication devices of a communication network for which a management task is to be performed or primary or secondary power system devices of an electric power system for which a management task is to be performed.

At step 72, one or several types of network actions to be performed for the marked node(s) are identified based on the freehand user input. Identifying the type(s) of network action may comprise interpreting textual input and/or graphical primitives. For illustration, a tick mark or the word "allow" may be interpreted to enable communication flow or power flow. A cross mark or the word "disable" may be interpreted to disable communication flow or power flow.

At step 73, an actor is triggered to implement the identified type of network action for the identified node(s) of the network. The actor may be an NMS. The input device 20 may communicatively interface with a stateful interface of the NMS 12 to trigger execution of the identified type of network action for the identified node(s) of the network. The input device 20 may communicatively interface with a stateless interface of the NMS 12 to trigger execution of the identified type of network action for the identified node(s) of the network. The input device 20 may communicatively interface with a REST API or gRPC Remote Procedure Call (gRPC) interface of the NMS 12 to trigger execution of the identified type of network action for the identified node(s) of the network.

The method may further comprise execution of the network action. The NMS 12 may change configuration data in one or several communication devices and/or secondary power system devices to implement the desired change.

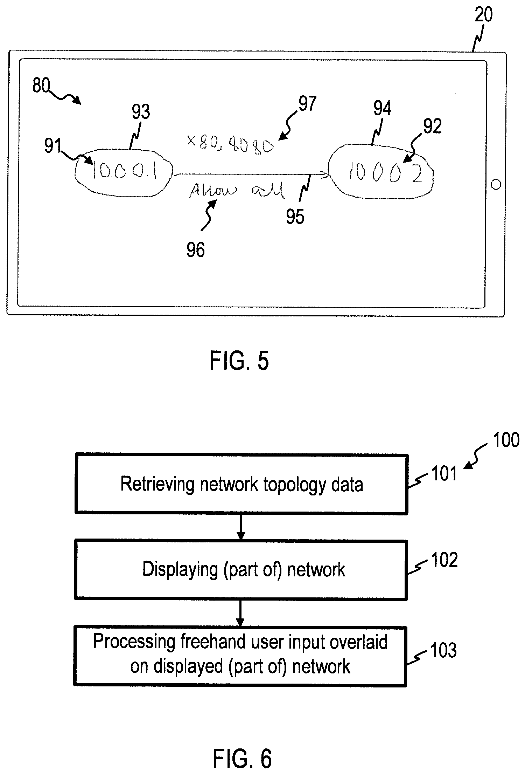

Different kinds of possible inputs to the input device 20 have been described above. Exemplary techniques of how graphical and/or alphanumeric input may be used to specify network operations are described with reference to Figures 5 to 17. While Figures 5 to 17 provides examples in the context of network flow management operations, the disclosed methods, systems, and devices can be used for other network actions.

The input device 20 may receive and the processing device 40 may interpret freehand user input that specifies the following:
Group: A logical group is a collection of one or more network nodes in a network topology. A group is created by drawing a closed shape, such as circle and box, around one or more nodes. Optionally, a group may be created without enclosing anything inside it. In the absence of enclosed topology nodes, network identifiers, such as IP address, can be written inside a group to identify its elements.
Interaction: Two groups can interact with each other, which is indicated by joining the two groups with a line. Arrowheads at one (or both) end(s) of such a line depicts the direction of interaction.
Action label: An action label indicates what network action is to be taken. It can be assigned to two interacting groups or a standalone group.

The input device 20 allows a user to use a blank screen to specify network operations. For example, in Figure 5, freehand user input 80 includes two closed shapes 93, 94 (e.g. elliptical shapes) drawn on a blank screen to represent two groups. Since no network topology is displayed, two IP addresses 91, 92 written inside the closed shapes 93, 94, respectively, help to map the groups to two different network hosts. Unidirectional interaction between the two groups is indicated by a line 95 with a single arrowhead. Finally, the action label 96, 97 "x80, 8080 Allow all" indicates that all network flows from 10.0.0.1 to 10.0.0.2 be allowed except those originating at ports 80 and 8080.

The GIR 41 uses network context to interpret that 80 and 8080 are port numbers. For illustration, a configuration description can be accessed and used to interpret 80 and 8080 as port numbers.

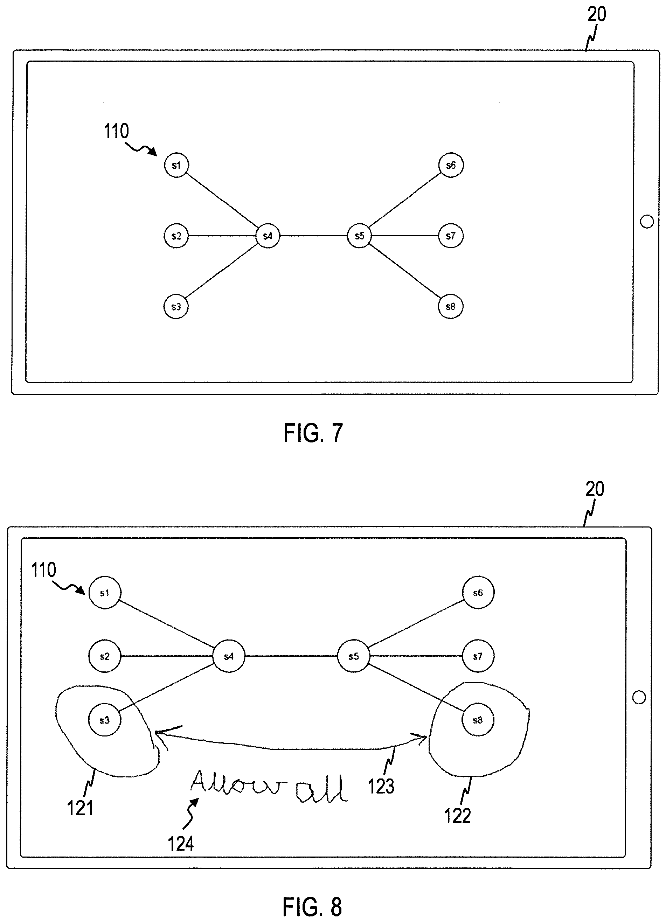

In addition, the input device 20 can load and display a network topology graph on its screen, as shown in Figure 7. Such a graphical network representation may be pre-configured with the input device 20, or may be pulled from network operator's network or cloud.

Figure 6 is a flow chart of a method 100. The method 100 may be performed automatically by the input device 20, optionally in association with a processing module 40 that may be provided separately from the input device 20.

At step 101, network topology data is retrieved. The network topology data may be retrieved by the input device 20 via a wireless interface. The network topology data may be retrieved from a configuration description of the network (e.g., from an SCL description).

At step 102, a graphical network representation showing at least part of a network topology graph is output via a screen or other output unit of the input device 20. The graphical network representation may show nodes, node identifiers, and links (communication links or power flow paths) between nodes.

At step 103, freehand user input that is overlaid onto the graphical network representation is processed to determine the network action(s) to be performed and to cause the desired network action(s) to be performed.

Figure 7 shows a graphical network representation 110 of a small network with eight nodes s1-s8 and seven links displayed on a screen of the input device 20.

An engineer can select parts of a network topology by creating logical groups, as shown in Figures 8 to 10.

In Figure 8, the two closed shapes 121, 122 contain the nodes labeled as s3 and s8 completely inside them. The processing module 40 interprets this as the first group containing s3 and the second group containing s8. The bidirectional joining element 123 between the groups and the action label 124 indicates that all network flows are to be allowed between s3 and s8 in both directions.

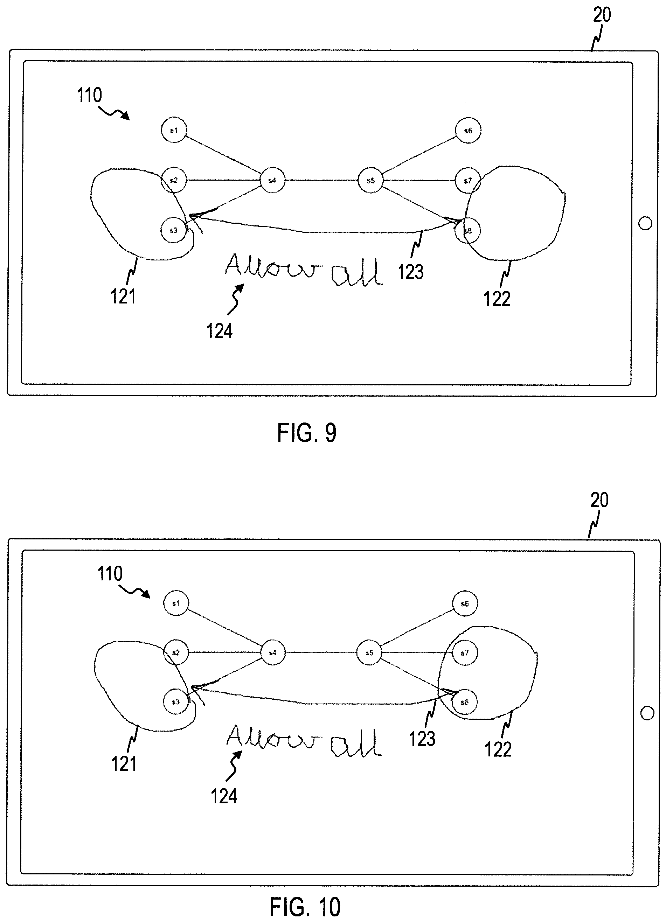

In some cases, freehand user input can lead to ambiguity. For example, in Figure 9, the node s3 lies completely inside a closed shape 121, but a boundary of a graphical representation of node s2 intersects the closed shape 121 of the freehand user input. Threshold comparison(s) applied to the area of overlap of the boundary of the node intersected by the closed shape 121 and/or the segment length of the line segment of closed shape 121 located within the boundary of the node intersected by the closed shape 121 may be used to resolve this ambiguity. For illustration, when the overlap between the group boundary 121 and the graphical boundary of node s2 is small (e.g., smaller than a length or area threshold), node s2 is not included in the respective group. On the other hand, since the group boundary 122 and graphical boundary of node s8 considerably overlap (e.g., have an overlap length that exceeds a threshold), s8 is included in the other group marked by closed shape 122.

Figure 10 shows an exemplary freehand user input in which nodes S7 and S8 are clearly located within the closed shape 122 marking a second group. Joining element 123 does not terminate at the closed shape 122, but extends into an interior of the closed shape 122. Ambiguity resolution (e.g., based on a distance threshold comparison) can be used to determine that the intent is that joining element 123 joins the closed shapes 121, 122 that designate first and second groups of nodes. In addition, Figure 10 indicates that the closed shape 122 consists of two nodes, S7 and S8, inside it. In other words, the second group 122 consists of two nodes in contrast to the first group 121, which consists of only a single node.

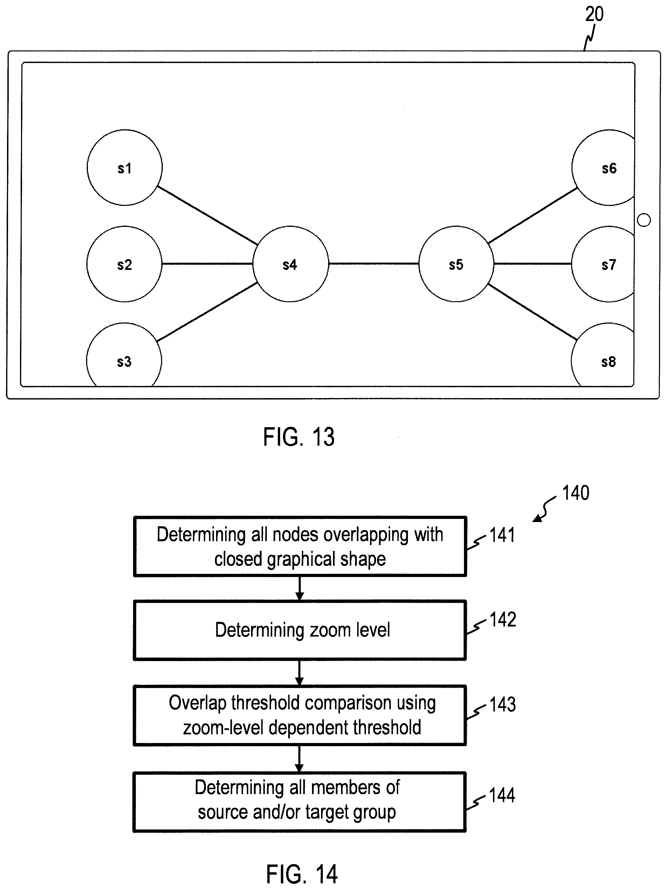

The SI 42 can use a threshold of boundary overlapping to identify whether or not a given node in a network topology is included in a given group. The threshold may be different for different zoom levels, as will be explained with reference to Figures 13 and 14.

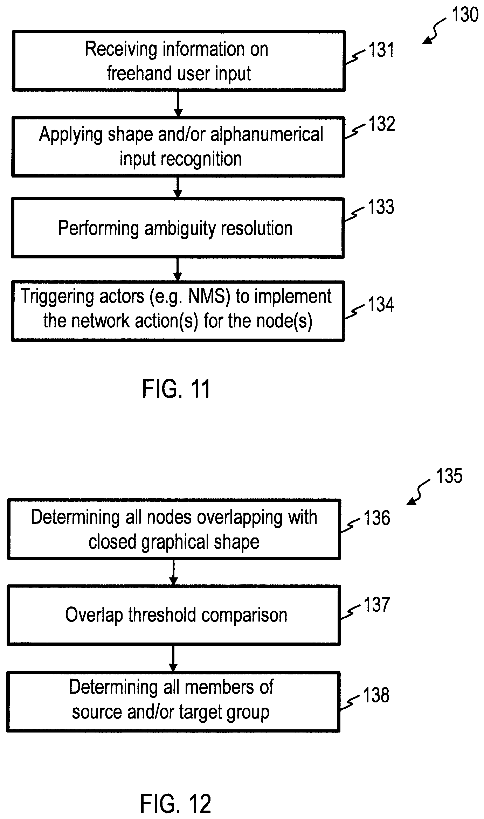

Figure 11 is a flow chart of a method 130. The method 130 may be performed automatically by the processing module 40.

At step 131, information on the freehand user input is received. The information on the freehand user input may include the coordinates of pixels activated by touch or proximity by the freehand user input action.

At step 132, shape recognition and/or alphanumeric input recognition is applied to the freehand user input to determine which type of network action is desired by the user and to which node(s) the type of network action is to be applied.

At step 133, an ambiguity resolution is performed. Step 133 may be selectively invoked. For illustration, the ambiguity resolution may be invoked selectively only when there is an ambiguity in the user's intent. The ambiguity resolution may comprise resolving ambiguities in graphical shape recognition. The ambiguity resolution may comprise determining which node(s) are intended to be marked by the freehand user input. The ambiguity resolution may comprise resolving ambiguities in alphanumeric input recognition. A threshold comparison may be performed in the ambiguity resolution. The threshold used in the threshold comparison may be adaptively varied depending on a zoom level set at the input device 20. The ambiguity resolution may optionally use network context, e.g. a configuration description and/or a process description.

At step 134, an actor is triggered to implement the identified type of network action for the identified node(s) of the network. The actor may be an NMS 12. The input device 20 may communicatively interface with a stateless API of the NMS 12 to trigger execution of the identified type of action. The input device 20 may communicatively interface with a stateful API of the NMS 12 to trigger execution of the identified type of action. The input device 20 may communicatively interface with a REST API or gRPC interface of the NMS 12 to trigger execution of the identified type of network action for the identified node(s) of the network.

Figure 12 is a flow chart of a method 135. The method 135 may be performed automatically by the processing module 40 to perform an ambiguity resolution (step 133 in Figure 11) when an ambiguity results from partial overlap of nodes in a graphical network representation and a closed shape in the freehand user input.

At step 136, all nodes overlapping at least partially with the closed graphical shape are identified. The identification will take into account the centers of the nodes in the graphical network representation and the radii of the nodes in the graphical network representation, which depend on the zoom level set at the input device.

At step 137, a threshold comparison is performed for an overlap (measured either in boundary line length or area) between the closed graphical shape and the graphical representation of the node. The threshold comparison is respectively performed for any node having a boundary in the graphical network representation that is intersected by the closed graphical shape of the freehand user input that is intended to delimit a group.

At step 138, all nodes that belong to at least one group (e.g., all nodes of a source group and all nodes of a target group) are determined based on the results of the threshold comparison at step 137.

The input device 20 may provide different zoom levels to adjust the visible portion of the network on the screen. For example, in Figure 13, the graphical network representation of Figure 7 is viewed at an increased zoom level. In case of large networks, a network engineer can view parts of the network by using different zoom levels.

In general, different zoom levels and sizes of closed shapes may be used to include multiple number of nodes inside a group. The threshold used in a threshold comparison for performing ambiguity resolution may be varied depending on zoom level. The threshold may be a monotonous function of zoom level. For example, the threshold may be a monotonously (e.g., strictly monotonously) increasing function of zoom level. For larger zoom level, a larger overlap can be required in order for a node to be affirmed to belong to a group.

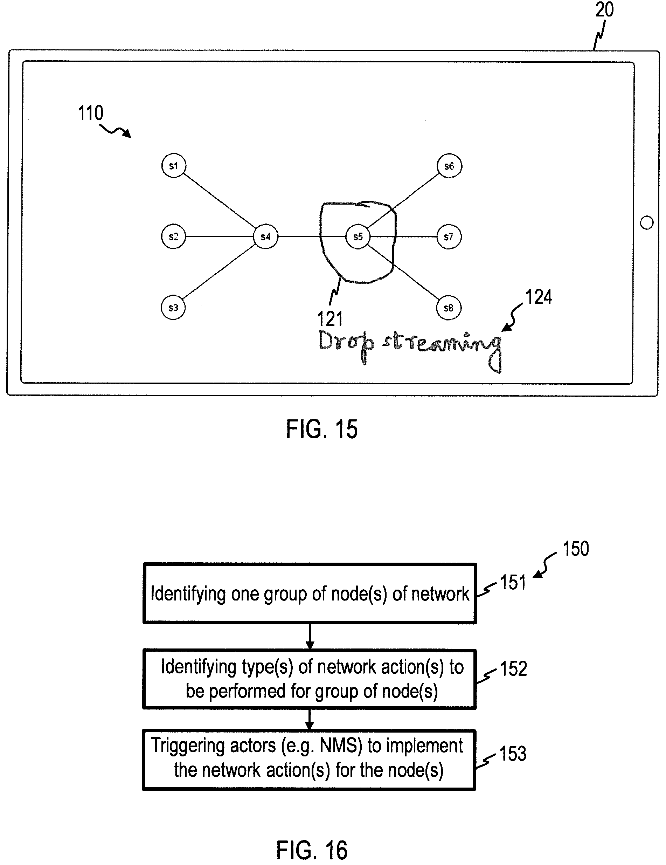

It is not required for a group of node(s) to include several node(s). It is not required that several groups of node(s) be designated by the freehand user input, as illustrated in Figure 15.

In Figure 15, a standalone group marked by closed shape 121 is illustrated. The group contains only the node s5. The action label 124 "Drop streaming" asks that all streaming packets (e.g., video streaming packets or stream(s) of measurement values) received at this node must be dropped. The GIR 41 causes appropriate flow rule(s) to be installed at this node, e.g., by causing the NMS 12 to implement the flow rule.

The SI 42 can use computer graphics algorithms to identify a logical group of network nodes. Each network node may be displayed as a circle on the screen of input device 20, and has a center coordinate and radius. The center and radius vary for different zoom levels.

When a closed shape is drawn on the input device 20 screen - either using a stylus or fingers - the SI 42 tracks all the screen coordinates. The SI 42 then uses one or more algorithms to identify which network nodes, if any, lie inside the user drawn closed shape. An algorithm, for example, may consider the network nodes whose center are located inside the closed region. In addition, the algorithm may also consider the network nodes whose centers lie outside the region, but which have radii extending into the region. The algorithm may consider a threshold of overlapping when a network node and a user drawn shape is found to be overlapping. The output of such an algorithm gives the network nodes that are included in the concerned group.

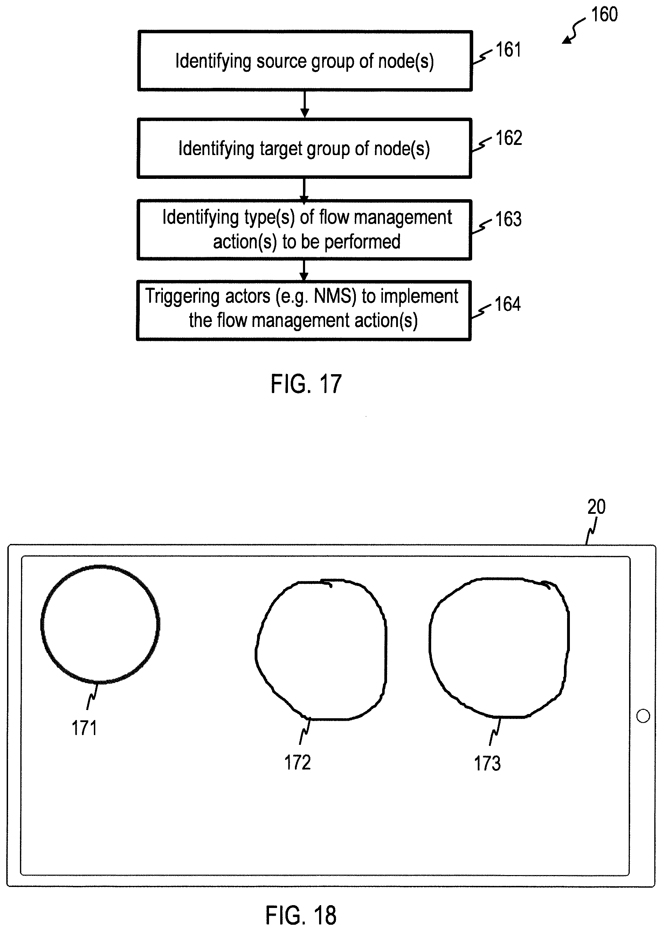

The disclosed techniques may be used to perform a flow management action or other network action that is applied to a single group of one or several nodes (Figure 15 and Figure 16), or that is applied to several groups of nodes (Figure 17).

Figure 16 is a flow chart of a method 150. The method 150 may be performed automatically by the processing module 40.

At step 151, a single group including one or several node(s) is identified based on the freehand user input. This may comprise performing shape recognition (e.g., by identifying a closed graphical shape) and optional alphanumeric input recognition (e.g., by recognizing IP address(es) of the designated nodes).

At step 152, shape recognition and/or alphanumeric input recognition is applied to the freehand user input to determine which type of network action is desired by the user. Step 152 may comprise assigning graphical primitives of the freehand user input with unique shape identifiers that designate graphical primitives. Step 152 may comprise interpreting alphanumeric input to be text or a network address. Step 152 may comprise identifying port numbers based on alphanumeric input. Step 152 may comprise identifying words included in the freehand user input as being one of a set of pre-defined words included in a vocabulary.

At step 153, an actor is triggered to implement the identified type of network action for the identified node(s) that are included in the single group. The actor may be an NMS 12. The input device 20 may be communicatively coupled with a stateless API of the NMS 12 to trigger execution of the identified action. The input device 20 may be communicatively coupled with a stateful API of the NMS 12 to trigger execution of the identified action. The input device 20 may communicatively interface with a REST API or gRPC interface of the NMS 12 to trigger execution of the identified type of network action for the identified node(s) of the network.

Figure 16 is a flow chart of a method 160. The method 160 may be performed automatically by the processing module 40.

At step 161, a first group including one or first several node(s) is identified based on the freehand user input. This may comprise performing shape recognition (e.g., by identifying a closed graphical shape) and optional alphanumeric input recognition (e.g., by recognizing IP address(es) of the designated nodes).

At step 162, a second group including one or several second node(s) is identified based on the freehand user input. This may comprise performing shape recognition (e.g., by identifying a closed graphical shape) and optional alphanumeric input recognition (e.g., by recognizing IP address(es) of the designated nodes).

At step 163, shape recognition and/or alphanumeric input recognition is applied to the freehand user input to determine which type of network action is desired by the user. Step 163 may comprise assigning graphical primitives of the freehand user input with unique shape identifiers that designate graphical primitives. Step 163 may comprise identifying a joining element connecting the first and second group. Step 163 may comprise interpreting alphanumeric input to be text or a network address. Step 163 may comprise identifying port numbers based on alphanumeric input. Step 163 may comprise identifying words included in the freehand user input as being one of a set of pre-defined words included in a vocabulary.

At step 164, an actor is triggered to implement the identified type of network action for the identified node(s) of the first and second groups. The actor may be an NMS 12. The input device 20 may be communicatively coupled with a stateless API of the NMS 12 to trigger execution of the identified action. The input device 20 may be communicatively coupled with a stateful API of the NMS 12 to trigger execution of the identified action. The input device 20 may communicatively interface with a REST API or gRPC interface of the NMS 12 to trigger execution of the identified type of network action for the identified node(s) of the network.

The system may be operative to perform training to train the SI 42, the TI 43, the MLC 44, and/or the GIR 41. The training may be performed selectively in response to detecting logon of a new user.

The input device 20 and/or processing module 40 may execute a training module for first-time users. A module running in the input device 20 displays a template 171 of different shapes, letters, and numbers as images in a small part of its screen and requests a user to draw them inside a blank space using a stylus or his/her finger in the remainder part of its screen, as shown in Figure 18. The process is repeated several times. The training process stops when user-drawn shapes 172, 173 are recognized with sufficient accuracy.

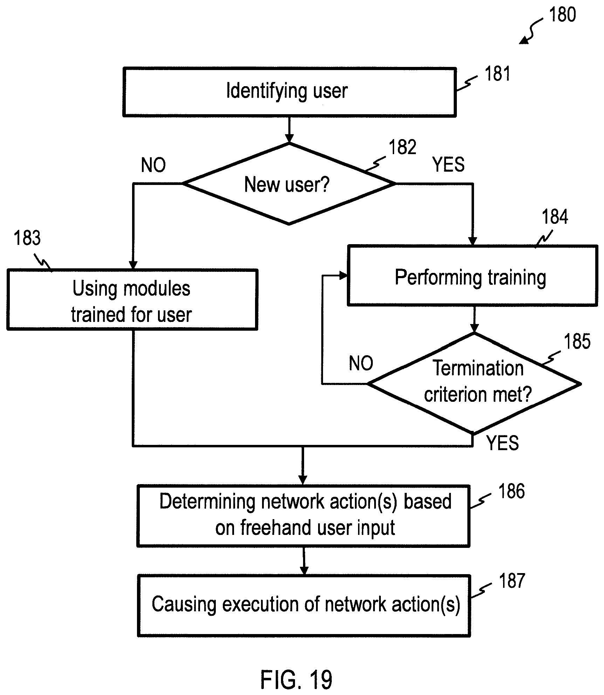

Figure 19 is a flow chart of a method 180. The method 180 may be performed by the input device 20.

At step 181, a user is identified. Identifying the user may be based on biometric features captured by the input device 20 and/or based on a username.

At step 182, it is determined whether the user is a new user who has not previously used the input device 20 and processing module 40 for configuring or reconfiguring network devices. If the user is not a new user, at step 183 classifiers or other machine learning components (such as MLC 44, SI 42, TI 43 etc.) that have been trained for that specific user may be invoked for interpreting the user's freehand user input.

At step 184, if the user is determined to be a new user, training is performed. The training may comprise training one or several classifiers or other machine learning components. For illustration, classifier(s) used for discriminating different shape primitives, different letters, and/or different words may be trained at step 184.

At step 185, if a termination criterion is not met, the training is continued. The termination criterion may include determining that training has involved freehand user inputs that encompass at least a training set of graphical primitives and/or a training set of letters and/or numbers. If the termination criterion is met, the trained modules are stored for future use and are used for interpreting freehand user input.

At step 186, freehand user input is processed to determine the network action(s) that are to be performed. The processing is implemented in a user-specific manner, based on the previous training.

At step 187, execution of the determined network action(s) is caused.

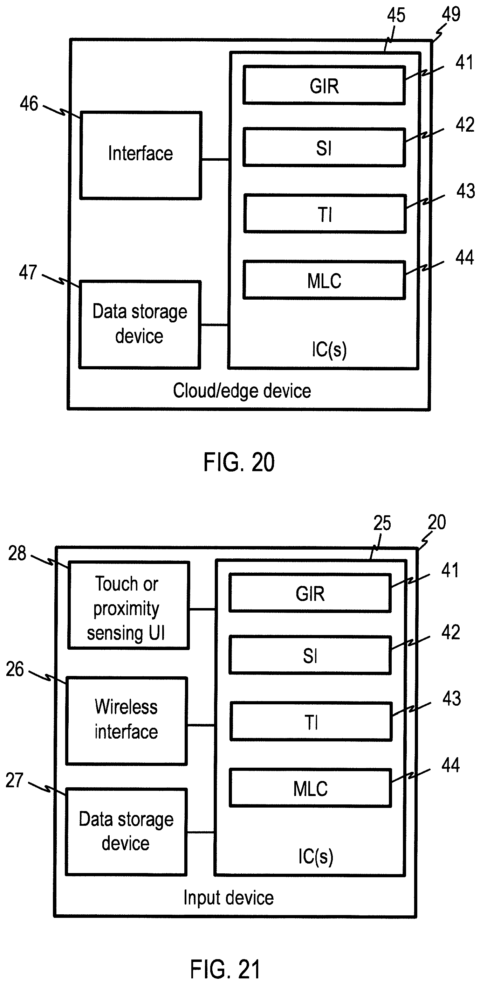

Figure 20 is a block diagram of a cloud or edge device 49. The cloud or edge device 49 may be operative to execute the processing module 40. The cloud or edge device 49 has one or several integrated circuit(s) (IC(s)) 45 to execute the processing module 40. The one or several IC(s) may include one or several of a processor, a microprocessor, a controller, a microcontroller, a field-programmable gate array (FPGA), an application specific integrated circuit (ASIC) or any combination thereof.

The cloud or edge device 49 has an interface 46. The interface 46 is operative to receive information on the freehand user input from a touch-sensing and/or proximity-sensing screen or other touch-sensing and/or proximity-sensing screen user interface of the input device 20 (e.g., in the form of screen coordinates of all activated points, optionally relative to a graphical network representation).

The IC(s) 45 are operative to determine which type of network action is to be performed and which node(s) are affected by the network action. Information on the network action(s) that is/are to be performed are provided to the input device 20 via interface 46, to allow execution of the network action(s) to be triggered.

The SI and TI modules 42, 43, after resolving all the input shapes and texts, respectively, feed their output to the GIR module 41. The GIR 41, using the current context, identifies the specific network action to be taken. For example, the GIR 41 may resolve the input "✔ 10.0.0.1:8080" to the firewall action of opening port 8080 for the host with address 10.0.0.1. Such actions are then fed back to the input device 20 and then verified by a network engineer. Subsequently, the input device 20 invokes appropriate interface (for example, REST) of the NMS 12 to trigger the network action.

The IC(s) 45 may use network context (e.g., information on network topology included in a configuration description and/or information on a process description) to resolve the user's intent, e.g. by determining which network action(s) are permissible. The IC(s) 45 may be operative such that the network context information comprises data retrieved from a network configuration description and/or data retrieved from a process description, which may be stored or buffered in a data storage device 47. The IC(s) 45 may be operative such that processing the freehand user input may comprise determining, based on the network context information, which network actions are permissible. The IC(s) 45 may be operative such that the determined permissible network actions is used for interpreting the user's intent, as specified by the freehand user input. The IC(s) 45 may be operative such that the determined permissible network actions are used for interpreting the user's intent, as specified by the freehand user input. The IC(s) 45 may be operative such that the determined permissible network actions are used for determining which classifier(s) are to be applied to the freehand user input. The IC(s) 45 may be operative such that the permissible network actions are used for selectively causing execution of the network action(s) only if the network action(s) are determined to be permissible network actions.

Figure 21 is a block diagram of an input device 20. The input device 20 may be operative to execute the processing module 40. The input device 20 has one or several integrated circuit(s) (IC(s)) 25 to execute the processing module 40. The one or several IC(s) may include one or several of a processor, a microprocessor, a controller, a microcontroller, a field-programmable gate array (FPGA), an application specific integrated circuit (ASIC) or any combination thereof.

The input device 20 has a touch or proximity sensing user interface 28. The touch or proximity sensing user interface 28 is operative to determine coordinates of pixels selected by the freehand user input.

The input device 20 has a wireless interface 26. The wireless interface 26 is operative to transmit information on the freehand user input (e.g., in the form of screen coordinates of all activated points, optionally relative to a graphical network representation), if processing is performed at least partially external to the input device 20.

The wireless interface 26 may be or may include a WLAN (e.g. Wi-Fi) or cellular (e.g., 4G or 5G) interface to connect to other networks or devices. The input device 20, for example, may use the wireless interface 26 to send the stylus-triggered screen coordinates to the SI and TI when the SI and TI are running in the cloud. The input device 20 may include user authentication mechanisms for connecting to the cloud.

In the illustrated embodiment, the IC(s) 25 are operative to determine which type of network action is to be performed and which node(s) are affected by the network action. Information on the network action(s) that is/are to be performed are provided to the input device 20 via interface 26, to allow execution of the network action(s) to be triggered. The IC(s) 25 may execute the SI and TI modules 42, 43 which resolve all the input shapes and texts, respectively, and the GIR module 41. The GIR 41, using the current context, identifies the specific network action to be taken. For example, the GIR 41 may resolve the input "✔ 10.0.0.1:8080" to the firewall action of opening port 8080 for the host with address 10.0.0.1. The input device 20 may output the identified network action(s) for verification and confirmation by a network engineer. Responsive to confirmation, the input device 20 invokes appropriate interface (for example, REST) of the NMS to trigger the network action. The input device 20 uses its wireless network interfaces to communicate with the NMS.

The IC(s) 25 may use network context (e.g., information on network topology included in a configuration description and/or information on a process description) to resolve the user's intent, e.g. by determining which network action(s) are permissible. The IC(s) 25 may be operative such that the network context information comprises data retrieved from a network configuration description and/or data retrieved from a process description, which may be stored or buffered in a data storage device 27. The IC(s) 25 may be operative such that processing the freehand user input may comprise determining, based on the network context information, which network actions are permissible. The IC(s) 25 may be operative such that the determined permissible network actions is used for interpreting the user's intent, as specified by the freehand user input. The IC(s) 25 may be operative such that the determined permissible network actions are used for interpreting the user's intent, as specified by the freehand user input. The IC(s) 25 may be operative such that the determined permissible network actions are used for determining which classifier(s) are to be applied to the freehand user input. The IC(s) 25 may be operative such that the permissible network actions are used for selectively causing execution of the network action(s) only if the network action(s) are determined to be permissible network actions.

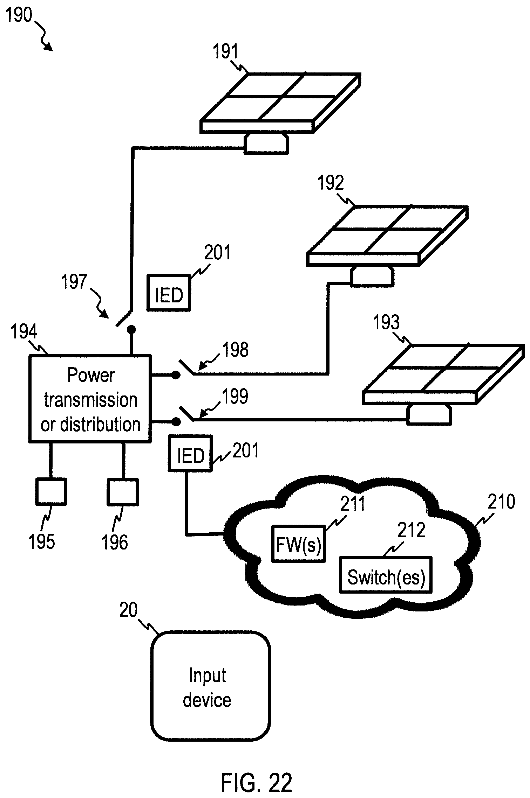

Figure 22 is a schematic view of a system 190 in which the input device 20 including the processing module 40 can be used. Optionally, the processing module 40 may be provided separately from the input device, as explained in association with Figure 1.

The system 190 comprises a distributed energy resource (DER) or microgrid. Several generators 191-193 provide electric power. The DER or microgrid may also comprise several loads 195, 196 connected to the generator(s) 191-193 via an electric power transmission and/or distribution system 194. Circuit breaker(s) (CB(s)), protection relay(s), and/or other power switches 197-199 allow generators 191-193 and/or loads 195, 196 to be selectively coupled. IED(s) 201 are deployed for controlling primary components. The IED(s) may be communicatively coupled via a network 210. The network 210 may include communication devices, such as one or several firewalls 211 and/or one or several communication switch(es) 212.

The input device 20 may be used by a network engineer to selectively configure or re-configure the communication network of the system 190 and/or to selectively configure or re-configure electric power flows of the system 190, using the techniques described in detail herein.

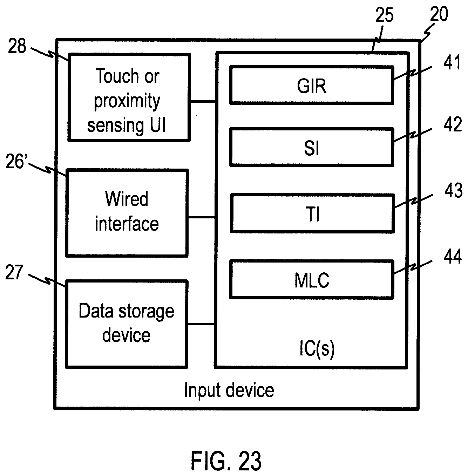

Figure 23 is a block diagram of an input device 20, which is generally similar to the input device 20 of Figure 21, but has a wired interface 26'. The wired interface 26'is operative to transmit information on the freehand user input (e.g., in the form of screen coordinates of all activated points, optionally relative to a graphical network representation), if processing is performed at least partially external to the input device 20.

The wired interface 26' may be or may include a universal serial bus (USB) or Ethernet interface to connect to other networks or devices. The input device 20, for example, may use the wired interface 26' to send the stylus-triggered screen coordinates to the SI and TI when the SI and TI are running in the cloud.

The network or management system (e.g., the NMS) of the utility system, industrial system, or communication network may offer an appropriate Application Programming Interface (API), such as REpresentational State Transfer (REST) or gRPC Remote Procedure Call (gRPC), for authorized access from external systems. A REST API, for example, can list one or more Uniform Resource Identifiers (URIs) to allow access to a subset of an NMS's functionality. For example, the following URI can be used to achieve various functionalities, such as adding a flow, removing a flow, and modifying a flow:
/flows/{from}/{to}/{filter}/{action}/{priority}

As an example, let us consider the scenario illustrated in Figure 5, where a flow is to be added from 10.0.0.1 to 10.0.0.2 allowing traffic from all input ports except 80 and 8080. This can be achieved by invoking the REST API twice, as shown in the following:

```
     curl -X POST -d '{
           "from": "10.0.0.1",
           "to": "10.0.0.2",
           "filter": {
                 "in_ports": [80, 8080],
           },
           "action": "Drop",
           "priority": 100
      }' http://network-manager/flows
     curl -X POST -d '{
           "from": "10.0.0.1",
           "to": "10.0.0.2",
           "action": "Allow",
           "priority": 90
      }' http://network-manager/flows
```

The first invocation triggers installation of higher-priority flow rule(s) to block traffic originating from the ports 80 and 8080 of 10.0.0.1. The second invocation triggers installation of lower-priority flow rule(s) to allow all other traffic between 10.0.0.1 and 10.0.0.2. The network or management system (e.g., the NMS) of the utility system, industrial system, or communication network may involve a path computation manager (PCM) that determines the appropriate routing path between 10.0.0.1 and 10.0.0.2 or any two nodes, in general. Subsequently, the network or management system (e.g., the NMS) of the utility system, industrial system, or communication network may install similar flow rules at all the node(s) between 10.0.0.1 and 10.0.0.2.

As another example, let us consider the scenario depicted in Figure 15, where all streaming traffic at switch s5 are to be dropped. This can be achieved by the following invocation:

```
     curl -X POST -d '{
           "from": "s5",
           "filter": {
                 "traffic_class": "streaming"
           },
           "action": "Drop",
           "priority": 1000
      }' http://network-manager/flows
```

It is assumed that a network classifies all traffic into different traffic classes, and "streaming" indicates one such class. Moreover, since only the "from" field is specified and no "to" field is supplied, the NMS understands that the corresponding flow rule is to be installed only at the "from" node, which is the switch s5 in this case. Consequently, all ingress and egress streaming traffic at s5 will be dropped.

The systems, devices, and methods according to the invention allow network flows to be managed using freehand drawings on a handheld mobile device. The systems, devices, and methods allow a network engineer to draw network nodes and actions on a blank screen, or load an existing network topology and mark the groups of nodes. The resulting shapes are processed in the cloud/edge or in the input device, based on which the network entities of interest and the corresponding actions are determined. Finally, the appropriate action is triggered via the NMS.

The systems, devices, and methods do not only reduce cognitive load of network engineers, but also reduce the operational cost and effort involved in managing a network.

When used for network flow management, the systems, devices, and methods can perform the following actions:
- Loading a network topology map or blueprint on a handheld device
- Receiving freehand user input that specifies network flow management operations, including marking on various parts of the topology
- Interpreting the desired network action based on the topology and markings
- Triggering the desired actions via a network management system (NMS)

The systems, devices, and methods provide various effects and benefits. The systems, devices, and methods provide a mechanism where a network engineer can specify his/her intended operation in an expressive manner without introducing ambiguity. Diagrams are easily understood by others without any confusion.

The systems, devices, and methods provide a simple and unambiguous approach to express an intended network operation

The systems, devices, and methods provide a simplified solution for incremental network management tasks

The systems, devices, and methods provide afford equal ease in usage for both experts and new network engineers

The systems, devices, and methods can be used to configure a to-be-commissioned network

The systems, devices, and methods can be used to configure energy flow in power distribution networks or communication flows in communication networks.

While embodiments have been described in the context of communication networks and electric power systems, the methods and computer systems are not limited thereto. The disclosed systems, methods, and devices may be used for network management tasks in an IACS that may, but does not need to be a power system.

While the invention has been described in detail in the drawings and foregoing description, such description is to be considered illustrative or exemplary and not restrictive. Variations to the disclosed embodiments can be understood and effected by those skilled in the art and practicing the claimed invention, from a study of the drawings, the disclosure, and the appended claims. In the claims, the word "comprising" does not exclude other elements or steps, and the indefinite article "a" or "an" does not exclude a plurality. The mere fact that certain elements or steps are recited in distinct claims does not indicate that a combination of these elements or steps cannot be used to advantage, specifically, in addition to the actual claim dependency, any further meaningful claim combination shall be considered disclosed.

## Claims

1. A method of initiating an action in a utility system, industrial system, or communication network (11), comprising:
processing, by at least one integrated circuit (25; 45), information on a freehand user input captured using an input device (20) to identify at least one action to be performed; and
causing, by the at least one integrated circuit (25; 45), a management or control system (12) of the utility system, industrial system, or communication network to execute the at least one action,
wherein processing the freehand user input comprises:
retrieving context information for the utility system, industrial system, or communication network, wherein the context information comprises data retrieved from a configuration description and/or data retrieved from a process description of the utility system, industrial system, or communication network,
determining, based on the context information, which actions are permissible; and
wherein processing the freehand user input is **characterized in**:
using the determined permissible actions for interpreting the user's intent, as specified by the freehand user input, wherein
the determined permissible actions are used for determining which classifier(s) are to be applied to the freehand user input, or
the determined permissible actions are used for selectively causing execution of the action(s) only if the action(s) are determined to be permissible actions.

2. The method of claim 1, further comprising outputting a graphical representation (110) of at least part of the utility system, industrial system, or communication network via an optical output unit of the input device (20), wherein the information on the freehand user input comprises information on graphical markings and/or alphanumeric symbols overlaid onto the graphical representation (110) by the freehand user input.

3. The method of claim 2, further comprising retrieving, by the input device (20), topology information for the utility system, industrial system, or communication network for generating the graphical representation (110), wherein the graphical representation (110) is generated based on the topology information and comprises nodes and links between nodes.

4. The method of any one of claims 1 to 3, wherein processing the information on the freehand user input comprises identifying at least one node of the utility system, industrial system, or communication network as being marked by the freehand user input.

5. The method of claim 4, wherein identifying the at least one node as being marked by the freehand user input comprises:
identifying a closed graphical shape (93, 94; 121, 122) in the freehand user input, and
identifying nodes having an alphanumeric representation or graphical representation that overlaps with the closed graphical shape (93, 94; 121, 122) or that is located within the closed graphical shape (93, 94; 121, 122).

6. The method of claim 5, wherein identifying the at least one node as being marked by the freehand user input comprises performing an ambiguity resolution,
optionally wherein the ambiguity resolution comprises:
determining an overlap between an envelope of the alphanumeric representation or the graphical representation of the at least one node with the closed graphical shape (93, 94; 121, 122) and
performing a threshold comparison of the overlap,
further optionally wherein the threshold comparison is adaptively modified as a function of a zoom level setting of the input device (20).

7. The method of any one of claims 4 to 6,
wherein identifying at least one node as being marked by the freehand user input comprises:
identifying a first group of nodes comprising one or several first nodes as being marked by the freehand user input;
identifying a second group of nodes comprising one or several second nodes as being marked by the freehand user input, the second group being different from the first group; and wherein causing the management or control system (12) to execute the at least one action comprises configuring a flow between the one or several first nodes and the one or several second nodes.

8. The method of any one of claims 4 to 7, wherein processing the information on the freehand user input further comprises determining a type of action to be performed based on at least one freehand graphical marking and/or freehand alphanumeric input (96; 124) included in the freehand user input and associated with the at least one node.

9. The method of any one of the preceding claims, wherein processing the information on the freehand user input comprises:
determining whether the freehand user input comprises a joining element (95; 123) that connects at least two nodes; and
performing a shape or text recognition to identify an action label (96, 97; 124) included in the freehand user input,
wherein the at least one action is identified based on the action label (96, 97; 124) and, if present, based on the joining element (95; 123).

10. The method of any one of the preceding claims, wherein processing the information on the freehand user input comprises executing a classifier and the method further comprises a classifier training of the classifier in response to detecting a new user logon, optionally wherein causing execution of the at least one action is selectively enabled in response to successful completion of the classifier training.

11. The method of any one of the preceding claims, wherein the at least one action is at least one flow management action.

12. The method of any one of the preceding claims, wherein the at least one action comprises at least one of the following:
configuring a communication flow, optionally comprising configuring a communication switch or port or firewall of a communication network;
reconfiguring a communication flow, optionally comprising reconfiguring a communication switch or port or firewall of a communication network;
configuring a power flow of a power transmission or distribution network;
reconfiguring a power flow of a power transmission or distribution network;
configuring a fluid flow of a fluid transmission or distribution network;
reconfiguring a fluid flow of a fluid transmission or distribution network.

13. The method of any one of the preceding claims, wherein the input device (20) is a mobile device, optionally a handheld device, having a wireless interface (26) or having a wired interface (26').

14. A system for initiating an action in a utility system, industrial system, or communication network, comprising:
an interface (28; 46) operative to receive information on a freehand user input;
at least one integrated circuit (25; 45) operative to
process the information on the freehand user input to identify at least one action to be performed; and
cause a management or control system (12) of the utility system, industrial system,
or communication network to execute the at least one action,
wherein at least one integrated circuit (25; 45) is operative such that processing the freehand user input comprises:
retrieving context information for the utility system, industrial system, or communication network, wherein the context information comprises data retrieved from a configuration description and/or data retrieved from a process description of the utility system, industrial system, or communication network,
determining, based on the context information, which actions are permissible; and
wherein processing the freehand user input is **characterized in**:
using the determined permissible actions for interpreting the user's intent, as specified by the freehand user input, wherein
the determined permissible actions are used for determining which classifier(s) are to be applied to the freehand user input, or
the determined permissible actions are used for selectively causing execution of the action(s) only if the action(s) are determined to be permissible actions.

15. The system of claim 14, further comprising:
the management or control system (12) operative to be communicatively coupled with the at least one integrated circuit (25; 45);
wherein
the at least one integrated circuit (25; 45) is integrated into a handheld device (20) and operative to trigger the management or control system (12) to execute the at least one action or
wherein the system further comprises a handheld device (20) to receive the freehand user input, the handheld device being communicatively coupled with the interface to provide information on the freehand user input to the at least one integrated circuit (25; 45).

## Patentansprüche

1. Verfahren zum Einleiten einer Aktion in einem Versorgungssystem, Industriesystem, oder Kommunikationsnetzwerk (11), umfassend:
Verarbeiten, durch zumindest eine integrierte Schaltung (25; 45), von unter Verwendung einer Eingabevorrichtung (20) erfassten Informationen über eine Freihandbenutzereingabe, um zumindest eine durchzuführende Aktion zu identifizieren; und
Veranlassen, durch die zumindest eine integrierte Schaltung (25; 45), eines Verwaltungs- oder Steuersystems (12) des Versorgungssystems, Industriesystems, oder Kommunikationsnetzwerks, die zumindest eine Aktion auszuführen,
wobei das Verarbeiten der Freihandbenutzereingabe umfasst:
Abrufen von Kontextinformationen für das Versorgungssystem, Industriesystem, oder Kommunikationsnetzwerk, wobei die Kontextinformationen Daten umfassen, die aus einer Konfigurationsbeschreibung abgerufen werden und/oder Daten, die aus einer Prozessbeschreibung des Versorgungssystems, Industriesystems, oder Kommunikationsnetzwerks abgerufen werden,
Bestimmen, basierend auf den Kontextinformationen, welche Aktionen zulässig sind; und
wobei das Verarbeiten der Freihandbenutzereingabe **gekennzeichnet ist durch**:
Verwenden der bestimmten zulässigen Aktionen zum Interpretieren der Absicht des Benutzers, wie **durch** die Freihandbenutzereingabe spezifiziert, wobei
die bestimmten zulässigen Aktionen verwendet werden, um zu bestimmen, welcher bzw. welche Klassifizierer auf die Freihandbenutzereingabe angewendet werden sollen, oder
die bestimmten zulässigen Aktionen verwendet werden, um die Ausführung der Aktion(en) selektiv nur für den Fall zu veranlassen, dass die Aktion(en) als zulässige Aktionen bestimmt worden sind.

2. Verfahren nach Anspruch 1, ferner umfassend Ausgeben einer grafischen Darstellung (110) von zumindest einem Teil des Versorgungssystems, Industriesystems, oder Kommunikationsnetzwerks über eine optische Ausgabeeinheit der Eingabevorrichtung (20), wobei die Informationen über die Freihandbenutzereingabe Informationen über grafische Markierungen und/oder alphanumerische Symbole umfassen, die durch die Freihandbenutzereingabe der grafischen Darstellung (110) überlagert werden.

3. Verfahren nach Anspruch 2, ferner umfassend Abrufen, durch die Eingabevorrichtung (20), von Topologieinformationen für das Versorgungssystem, Industriesystem, oder Kommunikationsnetzwerk zum Erzeugen der grafischen Darstellung (110), wobei die grafische Darstellung (110) basierend auf den Topologieinformationen erzeugt wird und Knoten und Verbindungen zwischen Knoten umfasst.

4. Verfahren nach irgendeinem der Ansprüche 1 bis 3, wobei das Verarbeiten der Informationen über die Freihandbenutzereingabe ein Identifizieren zumindest eines Knotens des Versorgungssystems, Industriesystems, oder Kommunikationsnetzwerks als durch die Freihandbenutzereingabe markiert umfasst.

5. Verfahren nach Anspruch 4, wobei das Identifizieren des zumindest einen Knotens als durch die Freihandbenutzereingabe markiert umfasst:
Identifizieren einer geschlossenen grafischen Form (93, 94; 121, 122) in der Freihandbenutzereingabe, und
Identifizieren von Knoten mit einer alphanumerischen Darstellung oder grafischen Darstellung, die mit der geschlossenen grafischen Form (93, 94; 121, 122) überlappt oder die innerhalb der geschlossenen grafischen Form (93, 94; 121, 122) gelegen ist.

6. Verfahren nach Anspruch 5, wobei das Identifizieren des zumindest einen Knotens als durch die Freihandbenutzereingabe markiert ein Durchführen einer Mehrdeutigkeitsauflösung umfasst,
wobei optional die Mehrdeutigkeitsauflösung umfasst:
Bestimmen einer Überlappung zwischen einer Hüllkurve der alphanumerischen Darstellung oder der grafischen Darstellung des zumindest einen Knotens mit der geschlossenen grafischen Form (93, 94; 121, 122) und
Durchführen eines Schwellenwertvergleichs der Überlappung,
wobei ferner optional der Schwellenwertvergleich adaptiv als eine Funktion einer Zoomstufeneinstellung der Eingabevorrichtung (20) modifiziert wird.

7. Verfahren nach irgendeinem der Ansprüche 4 bis 6,
wobei das Identifizieren zumindest eines Knotens als durch die Freihandbenutzereingabe markiert umfasst:
Identifizieren einer ersten Gruppe von Knoten mit einem oder mehreren ersten Knoten als durch die Freihandbenutzereingabe markiert;
Identifizieren einer zweiten Gruppe von Knoten mit einem oder mehreren zweiten Knoten als durch die Freihandbenutzereingabe markiert, wobei sich die zweite Gruppe von der ersten Gruppe unterscheidet; und
wobei das Veranlassen des Verwaltungs- oder Steuersystems (12), die zumindest eine Aktion auszuführen, ein Konfigurieren eines Flusses zwischen dem einen oder den mehreren ersten Knoten und dem einen oder den mehreren zweiten Knoten umfasst.

8. Verfahren nach irgendeinem der Ansprüche 4 bis 7, wobei das Verarbeiten der Informationen über die Freihandbenutzereingabe ferner ein Bestimmen einer Art von durchzuführender Aktion basierend auf zumindest einer grafischen Freihandmarkierung und/oder einer alphanumerischen Freihandeingabe (96; 124) umfasst, welche in der Freihandbenutzereingabe enthalten und mit dem zumindest einen Knoten assoziiert ist.

9. Verfahren nach irgendeinem der vorhergehenden Ansprüche, wobei das Verarbeiten der Informationen über die Freihandbenutzereingabe umfasst:
Bestimmen, ob die Freihandbenutzereingabe ein Verbindungselement (95; 123) umfasst, das zumindest zwei Knoten verbindet; und
Durchführen einer Form- oder Texterkennung, um ein Aktionslabel (96, 97; 124) zu identifizieren, das in der Freihandbenutzereingabe enthalten ist,
wobei die zumindest eine Aktion basierend auf dem Aktionslabel (96, 97; 124) und, falls vorhanden, basierend auf dem Verbindungselement (95; 123) identifiziert wird.

10. Verfahren nach irgendeinem der vorhergehenden Ansprüche, wobei das Verarbeiten der Informationen über die Freihandbenutzereingabe ein Ausführen eines Klassifizierers umfasst und das Verfahren ferner ein Klassifizierertraining des Klassifizierers in Antwort auf ein Erkennen einer neuen Benutzeranmeldung umfasst, wobei optional das Veranlassen der Ausführung der zumindest einen Aktion selektiv in Antwort auf einen erfolgreichen Abschluss des Klassifizierertrainings aktiviert wird.

11. Verfahren nach irgendeinem der vorhergehenden Ansprüche, wobei die zumindest eine Aktion zumindest eine Flussverwaltungsaktion ist.

12. Verfahren nach irgendeinem der vorhergehenden Ansprüche, wobei die zumindest eine Aktion zumindest eines der Folgenden umfasst:
Konfigurieren eines Kommunikationsflusses, optional umfassend Konfigurieren eines Kommunikationsswitches oder Ports oder Firewall eines Kommunikationsnetzwerks;
Rekonfigurieren eines Kommunikationsflusses, optional umfassend Rekonfigurieren eines Kommunikationsswitches oder Ports oder Firewall eines Kommunikationsnetzwerks;
Konfigurieren eines Leistungsflusses eines Leistungsübertragungs- oder -verteilungsnetzwerks;
Rekonfigurieren eines Leistungsflusses eines Leistungsübertragungs- oder -verteilungsnetzwerks;
Konfigurieren eines Fluidstroms eines Fluidübertragungs- oder -verteilungsnetzwerks;
Rekonfigurieren eines Fluidstroms eines Fluidübertragungs- oder -verteilungsnetzwerks.

13. Verfahren nach irgendeinem der vorhergehenden Ansprüche, wobei die Eingabevorrichtung (20) eine mobile Vorrichtung, optional eine handgehaltene Vorrichtung, mit einer drahtlosen Schnittstelle (26) oder mit einer drahtgebundenen Schnittstelle (26') ist.

14. System zum Einleiten einer Aktion in einem Versorgungssystem, Industriesystem, oder Kommunikationsnetzwerk, umfassend:
eine Schnittstelle (28; 46), die ausgelegt ist, um Informationen über eine Freihandbenutzereingabe zu empfangen;
zumindest eine integrierte Schaltung (25; 45), die ausgelegt ist zum:
Verarbeiten der Informationen über die Freihandbenutzereingabe, um zumindest eine durchzuführende Aktion zu identifizieren; und
Veranlassen eines Verwaltungs- oder Steuersystems (12) des Versorgungssystems, Industriesystems, oder Kommunikationsnetzwerks, die zumindest eine Aktion auszuführen,
wobei zumindest eine integrierte Schaltung (25; 45) so ausgelegt ist, dass das Verarbeiten der Freihandbenutzereingabe umfasst:
Abrufen von Kontextinformationen für das Versorgungssystem, Industriesystem, oder Kommunikationsnetzwerk, wobei die Kontextinformationen Daten umfassen, die aus einer Konfigurationsbeschreibung abgerufen werden und/oder Daten, die aus einer Prozessbeschreibung des Versorgungssystems, Industriesystems, oder Kommunikationsnetzwerks abgerufen werden,
Bestimmen, basierend auf den Kontextinformationen, welche Aktionen zulässig sind; und
wobei das Verarbeiten der Freihandbenutzereingabe **gekennzeichnet ist durch**:
Verwenden der bestimmten zulässigen Aktionen zum Interpretieren der Absicht des Benutzers, wie **durch** die Freihandbenutzereingabe spezifiziert, wobei
die bestimmten zulässigen Aktionen verwendet werden, um zu bestimmen, welcher bzw. welche Klassifizierer auf die Freihandbenutzereingabe angewendet werden sollen, oder
die bestimmten zulässigen Aktionen verwendet werden, um die Ausführung der Aktion(en) selektiv nur für den Fall zu veranlassen, dass die Aktion(en) als zulässige Aktionen bestimmt worden sind.

15. System nach Anspruch 14, ferner umfassend:
das Verwaltungs- oder Steuersystem (12), das ausgelegt ist, um kommunikativ mit der zumindest einen integrierten Schaltung (25; 45) gekoppelt zu werden;
wobei
die zumindest eine integrierte Schaltung (25; 45) in eine handgehaltene Vorrichtung (20) integriert ist und ausgelegt ist, das Verwaltungs- oder Steuersystem (12) zu triggern, die zumindest eine Aktion auszuführen oder
wobei das System ferner eine handgehaltene Vorrichtung (20) zum Empfangen der Freihandbenutzereingabe umfasst, wobei die handgehaltene Vorrichtung kommunikativ mit der Schnittstelle gekoppelt ist, um Informationen über die Freihandbenutzereingabe an die zumindest eine integrierte Schaltung (25; 45) bereitzustellen.

## Revendications

1. Procédé pour lancer une action dans un système d'infrastructures de distribution, un système industriel ou un réseau de communication (11), le procédé comprenant les étapes suivantes :
traiter, par au moins un circuit intégré (25 ; 45), des informations sur une entrée utilisateur à main levée capturée à l'aide d'un dispositif d'entrée (20) pour identifier au moins une action à effectuer ; et
amener, par l'au moins un circuit intégré (25 ; 45), un système (12) de gestion ou de commande du système d'infrastructures de distribution, du système industriel ou du réseau de communication à exécuter l'au moins une action,
où le traitement de l'entrée utilisateur à main levée comprend les étapes suivantes :
récupérer des informations de contexte pour le système d'infrastructures de distribution, le système industriel ou le réseau de communication, les informations de contexte comprenant des données extraites d'une description de configuration et/ou des données extraites d'une description de processus du système d'infrastructures de distribution, du système industriel ou du réseau de communication,
déterminer, sur la base des informations contextuelles, quelles actions sont autorisées ; et
où le traitement de l'entrée utilisateur à main levée est
**caractérisé par** :
l'utilisation des actions admissibles déterminées pour interpréter l'intention de l'utilisateur, comme spécifié par l'entrée utilisateur à main levée, où
les actions admissibles déterminées sont utilisées pour déterminer quels classificateurs doivent être appliqués à l'entrée utilisateur à main levée, ou
les actions admissibles déterminées sont utilisées pour provoquer sélectivement l'exécution des une ou plusieurs actions uniquement si elles sont déterminées comme des actions admissibles.

2. Procédé selon la revendication 1, comprenant en outre de délivrer en sortie une représentation graphique (110) d'au moins une partie du système d'infrastructures de distribution, du système industriel ou du réseau de communication par l'intermédiaire d'une unité de sortie optique du dispositif d'entrée (20), où les informations sur l'entrée utilisateur à main levée comprennent des informations sur des marquages graphiques et/ou des symboles alphanumériques superposés sur la représentation graphique (110) par l'entrée utilisateur à main levée.

3. Procédé selon la revendication 2, comprenant en outre de récupérer, par le dispositif d'entrée (20), des informations de topologie pour le système d'infrastructures de distribution, le système industriel ou le réseau de communication pour générer la représentation graphique (110), où la représentation graphique (110) est générée sur la base des informations de topologie et comprend des nœuds et des liens entre les nœuds.

4. Procédé selon l'une quelconque des revendications 1 à 3, dans lequel le traitement des informations sur l'entrée utilisateur à main levée comprend l'identification d'au moins un nœud du système d'infrastructures de distribution, du système industriel ou du réseau de communication comme étant marqué par l'entrée utilisateur à main levée.

5. Procédé selon la revendication 4, dans lequel l'identification de l'au moins un nœud comme étant marqué par l'entrée utilisateur à main levée comprend les étapes suivantes :
identifier une forme graphique fermée (93, 94 ; 121, 122) sur l'entrée utilisateur à main levée, et
identifier les nœuds présentant une représentation alphanumérique ou une représentation graphique qui chevauche la forme graphique fermée (93, 94 ; 121, 122) ou qui se trouve à l'intérieur de la forme graphique fermée (93, 94 ; 121, 122).

6. Procédé selon la revendication 5, dans lequel l'identification de l'au moins un nœud comme étant marqué par l'entrée utilisateur à main levée comprend l'exécution d'une résolution d'ambiguïté,
éventuellement, la résolution d'ambiguïté comprenant les étapes suivantes :
déterminer un recouvrement entre une enveloppe de la représentation alphanumérique ou la représentation graphique de l'au moins un nœud avec la forme graphique fermée (93, 94 ; 121, 122), et
réaliser une comparaison de seuil du chevauchement, en outre éventuellement, la comparaison de seuil étant modifiée de manière adaptative en fonction d'un réglage du niveau de zoom du dispositif d'entrée (20).

7. Procédé selon l'une quelconque des revendications 4 à 6,
dans lequel l'identification d'au moins un nœud comme étant marqué par l'entrée utilisateur à main levée comprend les étapes suivantes :
identifier un premier groupe de nœuds comprenant un ou plusieurs premiers nœuds comme étant marqués par l'entrée utilisateur à main levée ;
identifier un deuxième groupe de nœuds comprenant un ou plusieurs deuxièmes nœuds comme étant marqués par l'entrée utilisateur à main levée, le deuxième groupe étant différent du premier groupe ; et
où amener le système de gestion ou de commande (12) à exécuter l'au moins une action comprend de configurer un flux entre les un ou plusieurs premiers nœuds et les un ou plusieurs deuxièmes nœuds.

8. Procédé selon l'une quelconque des revendications 4 à 7, dans lequel le traitement des informations sur l'entrée utilisateur à main levée comprend en outre de déterminer un type d'action à effectuer sur la base d'au moins un marquage graphique à main levée et/ou une entrée alphanumérique à main levée (96 ; 124) inclus dans l'entrée utilisateur à main levée et associés à l'au moins un nœud.

9. Procédé selon l'une quelconque des revendications précédentes, le traitement des informations sur l'entrée utilisateur à main levée comprenant les étapes suivantes :
déterminer si l'entrée utilisateur à main levée comprend un élément de jointure (95 ; 123) qui relie au moins deux nœuds ; et
effectuer une reconnaissance de forme ou de texte pour identifier une étiquette d'action (96, 97 ; 124) incluse dans l'entrée utilisateur à main levée,
où l'au moins une action est identifiée sur la base de l'étiquette d'action (96, 97 ; 124) et, le cas échéant, sur la base de l'élément de jointure (95 ; 123).

10. Procédé selon l'une quelconque des revendications précédentes, dans lequel le traitement des informations sur l'entrée utilisateur à main levée comprend l'exécution d'un classificateur, et le procédé comprend en outre de procéder à un apprentissage du classificateur en réponse à la détection d'une nouvelle connexion utilisateur, où, facultativement, l'exécution de l'au moins une action est activée de manière sélective en réponse à l'achèvement réussi de l'apprentissage du classificateur.

11. Procédé selon l'une quelconque des revendications précédentes, dans lequel l'au moins une action est au moins une action de gestion de flux.

12. Procédé selon l'une quelconque des revendications précédentes, dans lequel l'au moins une action comprend au moins l'un des éléments suivants :
configurer un flux de communication comprenant éventuellement la configuration d'un commutateur de communication ou d'un port ou d'un pare-feu d'un réseau de communication ;
reconfigurer un flux de communication comprenant éventuellement la reconfiguration d'un commutateur de communication ou d'un port ou d'un pare-feu d'un réseau de communication ;
configurer un flux de puissance d'un réseau de distribution ou de transmission d'énergie ;
reconfigurer un flux d'énergie d'un réseau de transmission ou de distribution d'énergie ;
configurer un écoulement de fluide d'un réseau de distribution ou de transmission de fluide ;
reconfigurer un écoulement de fluide d'un réseau de distribution ou de transmission de fluide.

13. Procédé selon l'une quelconque des revendications précédentes, dans lequel le dispositif d'entrée (20) est un dispositif mobile, facultativement un dispositif portatif, ayant une interface sans fil (26) ou ayant une interface câblée (26').

14. Système pour lancer une action dans un système d'infrastructures de distribution, un système industriel ou réseau de communication, le système comprenant :
une interface (28 ; 46) permettant de recevoir des informations sur une entrée utilisateur à main levée ;
au moins un circuit intégré (25 ; 45) permettant de :
traiter les informations sur l'entrée utilisateur à main levée afin d'identifier au moins une action à effectuer ; et
faire exécuter l'au moins une action par un système de gestion ou de commande (12) du système d'infrastructures de distribution, du système industriel ou du réseau de communication,
où au moins un circuit intégré (25 ; 45) est fonctionnel de sorte que le traitement de l'entrée utilisateur à main levée comprend les étapes suivantes :
récupérer des informations de contexte pour le système d'infrastructures de distribution, le système industriel ou le réseau de communication, les informations de contexte comprenant des données extraites d'une description de configuration et/ou des données extraites d'une description de processus du système d'infrastructures de distribution, du système industriel ou du réseau de communication,
déterminer, sur la base des informations contextuelles, quelles actions sont autorisées ; et
où le traitement de l'entrée utilisateur à main levée est
**caractérisé par** :
l'utilisation des actions admissibles déterminées pour interpréter l'intention de l'utilisateur, comme spécifié par l'entrée utilisateur à main levée, où
les actions admissibles déterminées sont utilisées pour déterminer quels classificateurs doivent être appliqués à l'entrée utilisateur à main levée, ou
les actions admissibles déterminées sont utilisées pour provoquer sélectivement l'exécution des une ou plusieurs actions uniquement si elles sont déterminées comme des actions admissibles.

15. Système selon la revendication 14, comprenant en outre :
le système de gestion ou de commande (12) opérationnel pour être couplé de manière communicative avec l'au moins un circuit intégré (25 ; 45) ;
dans lequel
l'au moins un circuit intégré (25 ; 45) est intégré dans un dispositif portatif (20) et est opérationnel pour déclencher le système de gestion ou de commande (12) pour exécuter l'au moins une action, ou
où le système comprend en outre un dispositif portatif (20) destiné à recevoir l'entrée utilisateur à main levée, le dispositif portatif étant couplé de manière communicative à l'interface pour fournir des informations sur l'entrée utilisateur à main levée à l'au moins un circuit intégré (25 ; 45).
